# EUROPÄISCHE PATENTSCHRIFT

(11) **EP 2 132 245 B1**
(45) Veröffentlichungstag und Bekanntmachung des Hinweises auf die Patenterteilung: **15.11.2017**
(21) Anmeldenummer: 08735517.8
(22) Anmeldetag: 27.03.2008
(51) Int. Cl.: C08G 18/10, C08G 18/12, C08G 18/78

(54) **ISOCYANAT- UND ALDIMINOGRUPPEN AUFWEISENDE ZUSAMMENSETZUNG MIT NIEDRIGEM ISOCYANAT-MONOMERGEHALT**
COMPOUND WITH LOW ISOCYANATE-MONOMER CONTENT CONTAINING ISOCYANATE AND ALDIMINO GROUPS
COMPOSITION MUNIE DE GROUPES D'ISOCYANAT ET D'ALDIMINE CONTENANT UNE TENEUR EN ISOCYANAT MONOMÈRE MOINDRE

(30) Priorität: 27.03.2007 EP 07105003
(43) Veröffentlichungstag der Anmeldung: 16.12.2009
(73) Patentinhaber: Sika Technology AG, 6340 Baar (CH)
(72) Erfinder: BURCKHARDT, Urs, CH-8049 Zürich (CH)
(74) Vertreter: Sika Patent Attorneys
(86) Internationale Anmeldenummer: PCT/EP2008/053633
(87) Internationale Veröffentlichungsnummer: WO 2008/116901

(56) Entgegenhaltungen:
- EP-A1- 0 947 529
- DE-A1- 3 133 769

## Beschreibung

### Technisches Gebiet

Die Erfindung betrifft das Gebiet der Aldimine, der feuchtigkeitsvernetzenden Polyurethane, sowie deren Verwendung, insbesondere als reaktive Heissschmelzklebstoffe mit niedrigem Gehalt an monomeren Diisocyanaten.

### Stand der Technik

Aldimine sind Kondensationsprodukte aus Aminen und Aldehyden und stellen eine seit langem bekannte Stoffklasse dar. Bei Kontakt mit Wasser können Aldimine zu den entsprechenden Aminen und Aldehyden hydrolysieren, während sie in Abwesenheit von Wasser stabil sind. Aufgrund dieser Eigenart können sie als gebundene oder geschützte Form von Aminen verwendet werden. So werden Aldimine beispielsweise in der Polyurethanchemie eingesetzt, wo sie als durch Feuchtigkeit aktivierbare Vernetzer, so genannte "latente Amine" oder "latente Härter", für Isocyanat-haltige Polyurethanpolymere dienen. Die Verwendung von Aldiminen als latente Härter in feuchtigkeitshärtenden Isocyanat-haltigen Systemen hat dabei zweierlei Vorteile: zum einen lässt sich die Entstehung von unerwünschten Gasblasen im ausgehärteten Kunststoff vermeiden, da die Aushärtung über das latente Amin - im Gegensatz zur direkten Reaktion des Isocyanats mit Feuchtigkeit - nicht unter Freisetzung von Kohlendioxid (CO₂) verläuft; zum anderen lassen sich höhere Aushärtungsgeschwindigkeiten erzielen. Ihr Einsatz birgt aber auch Schwierigkeiten. So kann beispielsweise die Lagerstabilität von gewissen Aldiminen zusammen mit Isocyanaten ungenügend sein. Weiterhin benötigen die Systeme relativ viel Wasser zur Aushärtung, und der bei der Aushärtung frei werdende Aldehyd kann einen unerwünschten Geruch verursachen.

Aus US 4,469,831, US 4,853,454, US 5,087,661 und WO 2004/13200 sind feuchtigkeitshärtende Polyurethanzusammensetzungen enthaltend Polyaldimine bekannt, welche eine gute Lagerstabilität aufweisen, wobei die Systeme aus WO 2004/13200 zusätzlich geruchsfrei aushärten.

Weiterhin gibt es Ansätze, anstelle von Polyaldiminen und Polyisocyanaten Verbindungen zu verwenden, welche sowohl Isocyanatgruppen als auch Aldiminogruppen aufweisen. Solche Verbindungen sind beim Kontakt mit Feuchtigkeit selbsthärtend, wobei deutlich weniger Wasser zur Aushärtung benötigt wird als bei einer Aushärtung von Polyisocyanaten mit Polyaldiminen. Beispielsweise beschreibt US 6,136,942 Polyurethanpolymere, die sowohl Isocyanatgruppen als auch Aldiminogruppen aufweisen und die erhältlich sind aus der Umsetzung von Isocyanatgruppen aufweisenden Polymeren mit Monoaldiminen, welche zusätzlich über einen aktiven Wasserstoff in Form einer sekundären Aminogruppe verfügen. Die dafür verwendbaren Monoaldimine sind jedoch schwer zugänglich, was die Formulierungsfreiheiten stark einschränkt. Ausserdem haben diese Zusammensetzungen in ausgehärteter Form Probleme mit der Lichtechtheit.

Eine weitere Schwierigkeit bei der Verwendung von Isocyanatgruppen aufweisenden Polyurethanpolymeren ist die Problematik der monomeren Diisocyanate. Bei der Umsetzung von Polyolen mit Diisocyanaten zu oder bei der Herstellung von oligomeren Polyisocyanaten verbleibt aufgrund der statistischen Verteilung der möglichen Reaktionsprodukte ein Restgehalt an nicht umgesetzten monomeren Diisocyanaten im gebildeten Polymer. Diese monomeren Diisocyanate, auch kurz "Isocyanat-Monomere" genannt, sind flüchtige Verbindungen und können aufgrund ihrer reizenden, allergenen und/oder toxischen Wirkung schädlich sein. In vielen Anwendungsgebieten sind sie deshalb unerwünscht. Dies gilt insbesondere für Spritzapplikationen sowie für heiss zu verarbeitende Zusammensetzungen, wie beispielsweise Heissschmelzklebstoffe.

Es sind verschiedene Wege beschrieben worden, den Anteil an monomeren Diisocyanaten in Isocyanatgruppen aufweisenden Polyurethanpolymeren zu senken. Beispielsweise können die monomeren Diisocyanate aus dem Isocyanatgruppen aufweisenden Polyurethanpolymer nachträglich, beispielsweise durch Extraktion oder Destillation, teilweise oder ganz entfernt werden, was aber aufwändig und deshalb kostspielig ist. Ein niedriges NCO/OH-Verhältnis bei der Herstellung von Isocyanatgruppen aufweisenden Polyurethanpolymeren führt direkt zu einem niedrigen Isocyanat-Monomergehalt; so hergestellte Polymere weisen aber aufgrund von Oligomerisierungsreaktionen ("Kettenverlängerung") eine erhöhte Viskosität auf und sind damit im Allgemeinen schlechter zu verarbeiten und weniger lagerstabil. Die Verwendung eines asymmetrischen Diisocyanats mit zwei unterschiedlich reaktiven Isocyanatgruppen, wie beispielsweise beschrieben bei WO 03/006521, führt ebenfalls direkt zu einem niedrigen Gehalt an monomeren Diisocyanaten. Die so erhältlichen Isocyanatgruppen aufweisenden Polyurethanpolymere weisen aber im Allgemeinen eine verlangsamte Vernetzung auf, da für die Vernetzungsreaktion zur Hauptsache nur die weniger reaktive der beiden Isocyanatgruppen zur Verfügung steht.

### Darstellung der Erfindung

Die Aufgabe der vorliegenden Erfindung ist es daher, Isocyanatsysteme zur Verfügung zu stellen, welche die Nachteile des Standes der Technik überwinden.

Überraschenderweise lässt sich diese Aufgabe durch eine Zusammensetzung aus einer Isocyanat- und Aldiminogruppen aufweisende Verbindung und einem Polyisocyanat gemäss Anspruch 1 lösen.

Diese Verbindung, welche einen ersten Aspekt der Erfindung betrifft, lässt sich leicht herstellen und ist in Abwesenheit von Wasser lagerstabil. Ausgewählte Ausführungsformen (u ≥ v in Formel (I)) sind unter dem Einfluss von Feuchtigkeit selbsthärtend.

Weitere Aspekte der vorliegenden Erfindung betreffen ein Verfahren gemäss Anspruch 9 zur Herstellung besagter Verbindung.

Weitere Aspekte der vorliegenden Erfindung betreffen die Verwendung der Zusammensetzung als Klebstoff gemäss Anspruch 8 sowie ein Verfahren
zum Verkleben gemäss Anspruch 10. Diese Zusammensetzungen sind lagerfähig, enthalten einen niedrigen Gehalt an monomeren Diisocyanaten und vernetzen mit Feuchtigkeit rasch und ohne Blasenbildung. Die Aldiminogruppen aufweisende Verbindung ist erhältlich aus der partiellen Umsetzung von Polyisocyanaten mit asymmetrischen Dialdiminen und Wasser. In einer bevorzugten Ausführungsform stellt die Zusammensetzung einen reaktiven, mit Feuchtigkeit vernetzenden Heissschmelzklebstoff dar, welcher einen niedrigen Gehalt an monomeren Diisocyanaten aufweist.

In einem weiteren Aspekt betrifft die Erfindung ein Verfahren zur Verminderung des Gehalts an monomeren Diisocyanaten gemäss Anspruch 11. Dieses Verfahren erlaubt es in eleganter Art und Weise, ein sehr grosses Problem der Polyurethanchemie, nämlich das Vorhandensein von Anteilen an unerwünschten Diisocyanatmonomeren, kostengünstig und effizient zu lösen, mit dem Vorteil, dass die Monomere nicht einfach abreagiert werden, sondern sinnvoll eingebaut werden.

Besonders bevorzugte Ausführungsformen der Erfindung sind Gegenstand der abhängigen Ansprüche.

### Wege zur Ausführung der Erfindung

Gegenstand der vorliegenden Erfindung sind einem ersten Aspekt der Erfindung Isocyanatgruppen und Aldiminogruppen aufweisende Verbindungen **VB** der Formel (I).

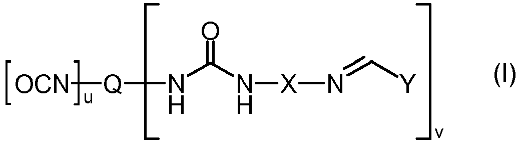

Hierbei steht Q für den Rest eines (u+v) endständige Isocyanatgruppen aufweisenden Polyisocyanats nach Entfernung aller Isocyanatgruppen. Weiterhin steht u für 1 oder 2 und v steht für 1 oder 2.

Y steht für den Rest der Formel (I a) oder (I b).

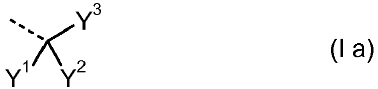

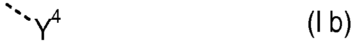

Hierbei stehen Y¹ und Y² entweder
unabhängig voneinander jeweils für einen einwertigen Kohlenwasserstoffrest mit 1 bis 12 C-Atomen, oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist.

Y³ steht für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist.

Y⁴ steht entweder
für eine substituierte oder unsubstituierte Aryl- oder Heteroaryl-Gruppe, welche eine Ringgrösse von 5 bis 8, bevorzugt 6, Atomen aufweist,
oder für 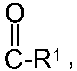 wobei R¹ für ein Wasserstoffatom oder für eine Alkoxygruppe steht,
oder für eine substituierte oder unsubstituierte Alkenyl- oder Arylalkenylgruppe mit mindestens 6 C-Atomen.

Schliesslich steht X für den Rest eines Diamins **DA** mit zwei primären Aminogruppen nach der Entfernung dieser zwei Aminogruppen. Hierbei gilt jedoch die Massgabe, dass mindestens eine der beiden primären Aminogruppen des Diamins **DA** eine aliphatische Aminogruppe ist und die zwei primären Aminogruppen des Diamins **DA** sich
entweder
in der Anzahl der Wasserstoffatome an den in α-Stellung zur jeweiligen Aminogruppe stehenden Kohlenstoffatomen (C_{α}) um mindestens eins
   oder
in der Anzahl der Wasserstoffatome an den in β-Stellung zur jeweiligen Aminogruppe stehenden Kohlenstoffatomen (C_{β}) um mindestens zwei
   voneinander unterscheiden.

Mit "Poly" beginnende Substanznamen wie Polyisocyanat, Polyamin, Polyol oder Polyaldimin bezeichnen im vorliegenden Dokument Substanzen, die formal zwei oder mehr der in ihrem Namen vorkommenden funktionellen Gruppen pro Molekül enthalten.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist.

Als "aliphatische Aminogruppe" wird im vorliegenden Dokument eine Aminogruppe bezeichnet, die an einen aliphatischen, cycloaliphatischen oder arylaliphatischen Rest gebunden ist. Sie unterscheidet sich damit von einer "aromatischen Aminogruppe", welche direkt an einen aromatischen oder heteroaromatischen Rest gebunden ist, wie beispielsweise in Anilin oder 2-Aminopyridin.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Die gestrichelten Linien in den Formeln in diesem Dokument stellen jeweils die Bindung zwischen einem Substituenten und dem zugehörigen Molekülrest dar.

Als "Raumtemperatur" wird eine Temperatur von 25 °C bezeichnet.

Y steht vorzugsweise für den Rest der Formel (I a).

Y¹ und Y² stehen jeweils bevorzugt für eine Methylgruppe.

Y³ steht für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist.

Einerseits kann Y³ insbesondere für eine verzweigte oder unverzweigte Alkyl-, Cycloalkyl-, Alkylen- oder Cycloalkylengruppe stehen, welche gegebenenfalls mindestens ein Heteroatom aufweist, insbesondere Ether-Sauerstoff.

Andererseits kann Y³ insbesondere für eine substituierte oder unsubstituierte Aryl- oder Arylalkylgruppe stehen.

Weiterhin kann Y³ kann insbesondere für einen Rest der Formel O-R² oder 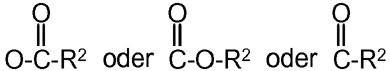 stehen, wobei R² seinerseits für eine Aryl-, Arylalkyl- oder Alkylgruppe steht und jeweils substituiert oder unsubstituiert ist.

Bevorzugt steht Y³ für einen Rest der Formel (II) oder (III), 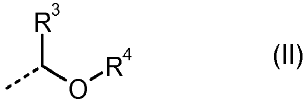 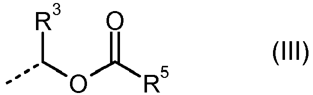
wobei R³ für ein Wasserstoffatom oder für eine Alkyl- oder Arylalkylgruppe, insbesondere mit 1 bis 12 C-Atomen, bevorzugt für ein Wasserstoffatom, steht;
R⁴ für einen Kohlenwasserstoffrest mit 1 bis 30, insbesondere 11 bis 30, C-Atomen, der gegebenenfalls Heteroatome enthält, steht; und
R⁵ entweder
   für ein Wasserstoffatom steht,
      oder
   für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
      oder
   für einen einfach oder mehrfach ungesättigten, linearen oder verzweigten Kohlenwasserstoffrest mit 5 bis 30 C-Atomen steht,
      oder
   für einen, gegebenenfalls substituierten, aromatischen oder heteroaromatischen 5- oder 6-gliedrigen Ring steht.

Besonders bevorzugt steht Y³ für einen Rest der Formel (III).

Bevorzugt stellt die Summe von u+v einen Wert von 2 oder 3 dar.

Eine Isocyanatgruppen und Aldiminogruppen aufweisende Verbindung **VB** der Formel (I) ist erhältlich durch ein Verfahren der Umsetzung von mindestens einem Dialdimin **A** der Formel (IV a) oder (IV b) mit mindestens einem Polyisocyanat der Formel (V) in Gegenwart einer unterstöchiometrischen Menge Wasser.

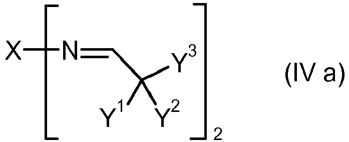

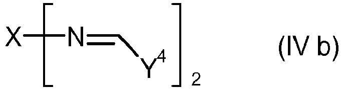

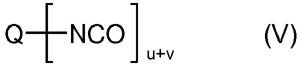

In den Formeln (IV a), (IV b) und (V) weisen X, Y¹, Y², Y³, Y⁴, u, v und Q die bereits genannten Bedeutungen auf.

Das Dialdimin **A** der Formel (IV a) oder (IV b) ist erhältlich durch eine Kondensationsreaktion unter Abspaltung von Wasser zwischen einem Diamin **DA** der Formel (VI) und einem Aldehyd **ALD** der Formel (VII a) oder (VII b). Der Aldehyd **ALD** der Formel (VII a) oder (VII b) wird hierbei in Bezug auf die Aminogruppen des Diamins **DA** stöchiometrisch oder im stöchiometrischen Überschuss eingesetzt.

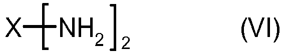

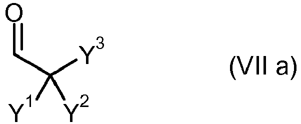

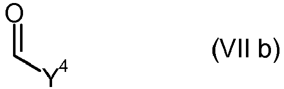

In den Formeln (VI), (VII a) und (VII b) weisen X, Y¹, Y², Y³ und Y⁴ die bereits erwähnten Bedeutungen auf.

Es ist für die vorliegende Erfindung wesentlich, dass sich die zwei primären Aminogruppen des Diamins **DA** entweder in der Anzahl der Wasserstoffatome an den in α-Stellung (= 1-Stellung) zur jeweiligen Aminogruppe stehenden Kohlenstoffatomen (C_{α}) um mindestens eins oder in der Anzahl der Wasserstoffatome an den in β-Stellung (= 2-Stellung) zur jeweiligen Aminogruppe stehenden Kohlenstoffatomen (C_{β}) um mindestens zwei voneinander unterscheiden.

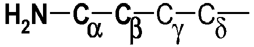

Das Diamin **DA** weist somit an den α- bzw. an den β-Kohlenstoffatomen zur jeweiligen Aminogruppe unterschiedliche Substitutionsmuster auf. Derartig unterschiedliche Substitution aufweisende Diamine, bzw. daraus abgeleitete Dialdimine, werden im vorliegenden Dokument auch als "asymmetrisch" bezeichnet. Diese unterschiedliche Substitution führt zu einer unterschiedlichen Reaktivität der zwei primären Aminogruppen, insbesondere gegenüber Isocyanatgruppen.

Das Diamin **DA** unterscheidet sich somit in einer Ausführungsform im Substitutionsmuster an den Kohlenstoffatomen, welche in α-Stellung zu den primären Aminogruppen stehen.

Derartige Diamine **DA** sind beispielsweise 1,2-Propandiamin, 2-Methyl-1,2-propandiamin, 1,3-Butandiamin, 1,3-Diaminopentan (DAMP), 4-Aminoethylanilin, 4-Aminomethylanilin, 4-[(4-Aminocyclohexyl)methyl]anilin, 2-Aminoethylanilin, 2-Aminomethylanilin, 2-[(4-Aminocyclohexyl)methyl]anilin und 4-[(2-Aminocyclohexyl)methyl]anilin.

Das Diamin **DA** unterscheidet sich somit in einer anderen Ausführungsform im Substitutionsmuster an den Kohlenstoffatomen, welche in β-Stellung zu den primären Aminogruppen stehen.

Derartige Diamine **DA** sind beispielsweise 2,2,4-Trimethylhexamethylendiamin (TMD), 1,5-Diamino-2-butyl-2-ethyl-pentan, 1-Amino-3-aminomethyl-3,5,5-trimethylcyclohexan (= Isophorondiamin = IPDA) und 1,4-Diamino-2,2,6-trimethylcyclohexan (TMCDA).

Das Diamin **DA** weist zwei primäre Aminogruppen auf, wovon mindestens eine aliphatisch ist. Die zweite Aminogruppe kann eine aliphatische oder eine aromatische Aminogruppe sein.

Nicht als Diamin **DA** der Formel (VI) gelten Diamine, deren Aminogruppen sich lediglich um ein Wasserstoffatom an den in β-Stellung zur jeweiligen Aminogruppe stehenden Kohlenstoffatomen (C_{β}) voneinander unterscheiden. Ein Beispiel für ein derartiges Diamin, welches kein Diamin **DA** darstellt, ist 2-Methylpentamethylendiamin (= 1,5-Diamino-2-methylpentan = MPMD). Ebenfalls nicht als Diamin **DA** der Formel (VI) gelten Diamine, deren Aminogruppen sich lediglich in der Anzahl der Wasserstoffatome an den in γ- oder δ-Stellung zur jeweiligen Aminogruppe stehenden Kohlenstoffatomen (Cγ bzw. C_{δ}) voneinander unterscheiden. In all diesen Fällen bewirkt das unterschiedliche Substitutionsmuster am Diamin keine unterschiedliche, oder eine nur unwesentlich unterschiedliche, Reaktivität der Aminogruppen, insbesondere gegenüber Isocyanatgruppen.

Bevorzugt ist das Diamin **DA** der Formel (VI) ausgewählt aus der Gruppe bestehend aus 1,3-Diaminopentan (DAMP), 1,5-Diamino-2-butyl-2-ethyl-pentan, 2,2,4-Trimethylhexamethylendiamin (TMD) und 1-Amino-3-aminomethyl-3,5,5-trimethylcyclohexan (= Isophorondiamin = IPDA).

Die Diamine **DA** der Formel (VI) weisen zwei primäre Aminogruppen auf. Abgesehen von diesen zwei Aminogruppen sind die Diamine **DA** frei von Gruppierungen, die mit Isocyanatgruppen reaktionsfähig sind; insbesondere weisen sie keine Hydroxylgruppen, keine sekundären Aminogruppen und keine Mercaptogruppen auf.

Zur Herstellung eines Dialdimins **A** der Formel (IV a) oder (IV b) werden Aldehyde **ALD** der Formel (VII a) oder (VII b) verwendet. Die Aldehyde **ALD** haben die Eigenschaft, dass ihre Reste Y¹, Y², Y³ und Y⁴ keine Gruppierungen aufweisen, die mit Isocyanatgruppen reaktionsfähig sind; insbesondere weisen Y¹, Y², Y³ und Y⁴ keine Hydroxylgruppen, keine primären oder sekundären Aminogruppen und keine Mercaptogruppen auf.

Zur Herstellung eines Dialdimins **A** der Formel (IV a) sind Aldehyde **ALD** der Formel (VII a) geeignet, wobei Y¹, Y² und Y³ die bereits genannten Bedeutungen aufweisen.

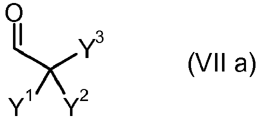

Aldehyde **ALD** der Formel (VII a) stellen tertiäre aliphatische oder tertiäre cycloaliphatische Aldehyde dar. Geeignete Aldehyde **ALD** der Formel (VII a) sind beispielsweise Pivalaldehyd (= 2,2-Dimethyl-propanal), 2,2-Dimethyl-butanal, 2,2-Diethyl-butanal, 1-Methyl-cyclopentancarboxaldehyd, 1-Methyl-cyclohexancarboxaldehyd; Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, 3-Hydroxybutanalen oder analogen höheren Aldehyden, insbesondere von 2,2-Dimethyl-3-hydroxypropanal.

Besonders geeignete Aldehyde **ALD** der Formel (VII a) sind einerseits Aldehyde **ALD1** der Formel (VIII), das heisst, Aldehyde **ALD** der Formel (VII a) mit dem Rest Y³ der Formel (II).

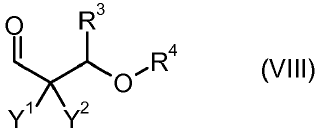

In der Formel (VIII) weisen Y¹, Y², R³ und R⁴ die bereits genannten Bedeutungen auf.

In Formel (VIII) stehen Y¹ und Y² jeweils bevorzugt für eine Methylgruppe, und R³ steht bevorzugt für ein Wasserstoffatom.

Aldehyde **ALD1** der Formel (VIII) stellen Ether von aliphatischen, cycloaliphatischen oder arylaliphatischen 2,2-disubstituierten 3-Hydroxyaldehyden mit Alkoholen oder Phenolen der Formel R⁴-OH, beispielsweise Fettalkoholen oder Phenol, dar. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären cycloaliphatischen oder sekundären arylaliphatischen Aldehyden, wie beispielsweise Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd.

Als Beispiele solcher Aldehyde **ALD1** der Formel (VIII) genannt sind 2,2-Dimethyl-3-phenoxy-propanal, 3-Cyclohexyloxy-2,2-dimethyl-propanal, 2,2-Dimethyl-3-(2-ethylhexyloxy)-propanal, 2,2-Dimethyl-3-lauroxy-propanal und 2,2-Dimethyl-3-stearoxy-propanal.

Besonders geeignete Aldehyde **ALD** der Formel (VII a) sind andererseits Aldehyde **ALD2** der Formel (IX), das heisst, Aldehyde **ALD** der Formel (VII a) mit dem Rest Y³ der Formel (III). 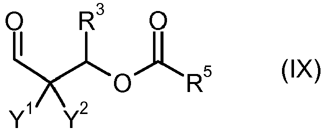 In Formel (IX) weisen Y¹, Y², R³ und R⁵ die bereits genannten Bedeutungen auf.

In Formel (IX) stehen Y¹ und Y² jeweils bevorzugt für eine Methylgruppe, und R³ steht bevorzugt für ein Wasserstoffatom.

Aldehyde **ALD2** der Formel (IX) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit geeigneten Carbonsäuren dar.

Beispiele für geeignete Carbonsäuren sind zum einen aliphatische Carbonsäuren, wie Ameisensäure, Essigsäure, Propionsäure, Buttersäure, Isobuttersäure, Valeriansäure, Capronsäure, 2-Ethyl-capronsäure, Caprinsäure, Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche solche Säuren enthalten. Als Carbonsäuren geeignet sind zum anderen aromatische Carbonsäuren, beispielsweise Benzoesäure oder die stellungsisomeren Tolylsäuren, Ethyl- oder Isopropyl- oder tert.-Butyl- oder Methoxy- oder Nitrobenzoesäuren.

Bevorzugte Aldehyde **ALD2** der Formel (IX) sind 3-Benzoyloxy-2,2-di-methylpropanal, 3-Cyclohexanoyloxy-2,2-dimethylpropanal, 2,2-Dimethyl-3-(2-ethylhexyloxy)-propanal, 2,2-Dimethyl-3-lauroyloxy-propanal, 2,2-Dimethyl-3-myristoyloxypropanal, 2,2-Dimethyl-3-palmitoyloxy-propanal, 2,2-Dimethyl-3-stearoyloxypropanal und, sowie analoge Ester anderer 2,2-disubstituierter 3-Hydroxyaldehyde.

In einer besonders bevorzugten Ausführungsform ist R⁵ ausgewählt aus der Gruppe bestehend aus Phenyl, Cyclohexyl und den C₁₁-, C₁₃-, C₁₅- und C₁₇-Alkylgruppen.

Als Aldehyd **ALD2** der Formel (IX) besonders bevorzugt ist 2,2-Dimethyl-3-lauroyloxypropanal.

In einer bevorzugten Herstellmethode des Aldehyds **ALD2** der Formel (IX) wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

In einer besonders bevorzugten Ausführungsform ist der Aldehyd ALD der Formel (VII a) geruchsfrei. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.

Geruchsfreie Aldehyde **ALD** der Formel (VII a) sind einerseits insbesondere Aldehyde **ALD1** der Formel (VIII), in welchen der Rest R⁴ für einen Kohlenwasserstoffrest mit 11 bis 30 C-Atomen, der gegebenenfalls Heteroatome enthält, steht.

Andererseits sind geruchsfreie Aldehyde **ALD** der Formel (VII a) insbesondere Aldehyde **ALD2** der Formel (IX), in welchen der Rest R⁵ entweder für eine lineare oder verzweigte Alkylgruppe mit 11 bis 30 Kohlenstoff-Atomen, gegebenenfalls mit cyclischen Anteilen, und gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 Kohlenstoff-Atomen steht.

Beispiele für geruchsfreie Aldehyde **ALD2** der Formel (IX) sind Veresterungsprodukte aus den bereits genannten 2,2-disubstituierten 3-Hydroxyaldehyden mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten, wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche diese Säuren enthalten. Bevorzugte Aldehyde der Formel (IX) sind 2,2-Dimethyl-3-lauroyloxypropanal, 2,2-Dimethyl-3-myristoyloxypropanal, 2,2-Dimethyl-3-palmitoyloxypropanal und 2,2-Dimethyl-3-stearoyloxypropanal. Besonders bevorzugt ist 2,2-Dimethyl-3-lauroyloxypropanal.

Zur Herstellung eines Dialdimins **A** der Formel (IV b) sind Aldehyde **ALD** der Formel (VII b) geeignet.

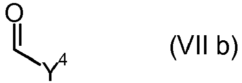

Geeignete Aldehyde **ALD** der Formel (VII b) sind aromatische Aldehyde, wie beispielsweise Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7- und 8-Stellungsisomere, sowie Anthracen-9-carbaldehyd.

Geeignete Aldehyde **ALD** der Formel (VII b) sind weiterhin Glyoxal, Glyoxalsäureester, beispielsweise Glyoxalsäuremethylester, Zimtaldehyd und substituierte Zimtaldehyde.

Das Dialdimin **A** der Formel (IV a) mit aliphatischen Aldiminogruppen und das Dialdimin **A** der Formel (IV b) mit aromatischen Aldiminogruppen haben die Eigenschaft, dass ihre Aldiminogruppen nicht zu Enaminogruppen tautomerisieren können, da sie als Substituenten in α-Stellung zum C-Atom der Aldiminogruppe keinen Wasserstoff enthalten.

Dialdimine **A,** welche ausgehend von geruchsfreien Aldehyden der vorgängig beschriebenen besonders bevorzugten Ausführungsform hergestellt sind, sind geruchsfrei. Solche geruchsfreien Dialdimine **A** sind besonders bevorzugt zur Umsetzung mit Polyisocyanaten, da auf diese Weise geruchsfreie Verbindungen **VB** zugänglich sind.

Als Dialdimine **A** sind diejenigen, welche die Formel (IV a) aufweisen, bevorzugt.

Ein zur Umsetzung mit mindestens einem Dialdimin **A** geeignetes Polyisocyanat der Formel (V) ist in einer bevorzugten Ausführungsform ein Isocyanatgruppen aufweisendes Polyurethanpolymer **PUP.**

Ein geeignetes Isocyanatgruppen aufweisendes Polyurethanpolymer **PUP** ist erhältlich durch die Umsetzung von mindestens einem Polyol mit mindestens einem Polyisocyanat.

Als Polyole für die Herstellung eines Polyurethanpolymers **PUP** können beispielsweise die folgenden handelsüblichen Polyole oder Mischungen davon eingesetzt werden:
- Polyetherpolyole, auch Polyoxyalkylenpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Als Polyetherpolyole besonders geeignet sind Polyoxyalkylendiole und -triole, insbesondere Polyoxyalkylendiole. Besonders geeignete Polyoxyalkylendi- und triole sind Polyoxyethylendi- und -triole sowie Polyoxypropylendi- und -triole.
   Besonders geeignet sind Polyoxypropylendiole und -triole mit einem Ungesättigtheitsgrad tiefer als 0.02 mEq/g und einem Molekulargewicht im Bereich von 1000 bis 30'000 g/mol, sowie Polyoxypropylendiole und -triole mit einem Molekulargewicht von 400 bis 8'000 g/mol. Unter 'Molekulargewicht' oder 'molgewicht' versteht man im vorliegenden Dokument stets das Molekulargewichtsmittel Mₙ. Insbesondere geeignet sind Polyoxypropylendiole mit einem Ungesättigtheitsgrad tiefer als 0.02 mEq/g und einem Molekulargewicht im Bereich von 1000 bis 12'000, insbesondere zwischen 1000 und 8000 g/mol. Solche Polyetherpolyole werden beispielsweise unter dem Handelsnamen Acclaim® von Bayer vertrieben.
   Ebenfalls besonders geeignet sind sogenannte "EO-endcapped" (ethylene oxide-endcapped) Polyoxypropylendiole und -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Insbesondere geeignet sind Polyesterpolyole, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-caprolacton und Startern wie den vorgenannten zwei- oder dreiwertigen Alkoholen.
   Besonders geeignete Polyesterpolyole sind Polyesterdiole. Insbesondere geeignete Polyesterdiole sind solche hergestellt aus Adipinsäure, Azelainsäure, Sebacinsäure, Dodecandicarbonsäure, Dimerfettsäure, Phthalsäure, Isophthalsäure und Terephthalsäure als Dicarbonsäure und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol. Insbesondere geeignet sind auch Polyesterdiole hergestellt aus ε-caprolacton und einem der vorgenannten zweiwertigen Alkohole als Starter.
   Insbesondere geeignet sind bei Raumtemperatur flüssige, amorphe, teilkristalline und kristalline Polyesterdi- und -triole, insbesondere Polyesterdiole. Geeignete bei Raumtemperatur flüssige Polyesterpolyole sind nicht weit unterhalb von Raumtemperatur fest, beispielsweise bei Temperaturen zwischen 0°C und 25°C, und werden vorzugsweise in Kombination mit mindestens einem amorphen, teilkristallinen oder kristallinen Polyesterpolyol eingesetzt.
- Polycarbonatpolyole, wie sie durch Umsetzung beispielsweise der oben genannten - zum Aufbau der Polyesterpolyole eingesetzten - Alkohole mit Dialkylcarbonaten, wie Dimethylcarbonat, Diarylcarbonaten, wie Diphenylcarbonat, oder Phosgen zugänglich sind.
   Besonders geeignet sind Polycarbonatdiole, insbesondere amorphe Polycarbonatdiole.
- Als Polyole ebenfalls geeignet sind mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.
- Polyacrylat- und Polymethacrylatpolyole.
- Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell erhältlich unter dem Namen Hycar® CTBN von Hanse Chemie) hergestellt werden können.

Diese genannten Polyole weisen bevorzugt ein mittleres Molekulargewicht von 250 - 30'000 g/mol, insbesondere von 400 - 20'000 g/mol, und weisen bevorzugt eine mittlere OH-Funktionalität im Bereich von 1.6 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, niedrigmolekulare Alkoxylierungsprodukte der vorgenannten zwei- und mehrwertigen Alkohole, sowie Mischungen der vorgenannten Alkohole bei der Herstellung eines Polyurethanpolymers **PUP** mitverwendet werden.

Als Polyisocyanate für die Herstellung eines Polyurethanpolymers **PUP** können handelsübliche aliphatische, cycloaliphatische oder aromatische Polyisocyanate, insbesondere Diisocyanate, verwendet werden, beispielsweise die folgenden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocya-nato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate, sowie beliebige Mischungen der vorgenannten Isocyanate. Bevorzugt sind monomere Diisocyanate, insbesondere MDI, TDI, HDI und IPDI.

Die Herstellung des Polyurethanpolymers **PUP** erfolgt in bekannter Art und Weise direkt aus den Polyisocyanaten und den Polyolen, oder durch schrittweise Adduktionsverfahren, wie sie auch als Kettenverlängerungsreaktionen bekannt sind.

In einer bevorzugten Ausführungsform wird das Polyurethanpolymer **PUP** über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 5, insbesondere 1.5 bis 3.

Das Polyurethanpolymer **PUP** weist ein Molekulargewicht von vorzugsweise über 500 g/mol, insbesondere ein solches zwischen 1000 und 50'000 g/mol, bevorzugt ein solches zwischen 2000 und 30'000 g/mol, auf.

Weiterhin weist das Polyurethanpolymer **PUP** bevorzugt eine mittlere Funktionalität im Bereich von 1.8 bis 3 auf.

In einer bevorzugten Ausführungsform ist das Polyurethanpolymer **PUP** ein bei Raumtemperatur festes Polyurethanpolymer **PUP1.** Ein bei Raumtemperatur festes Polyurethanpolymer **PUP1** ist vorteilhaft erhältlich ausgehend von Polyetherpolyolen, Polyesterpolyolen und Polycarbonatpolyolen. Insbesondere geeignet sind bei Raumtemperatur flüssige, amorphe, teilkristalline und kristalline Polyester- und Polycarbonatdi- und -triole, insbesondere Polyesterdiole und Polycarbonatdiole, wobei bei Raumtemperatur flüssige Polyester- und Polycarbonatdi- und -triole nicht weit unterhalb von Raumtemperatur fest sind, beispielsweise bei Temperaturen zwischen 0 °C und 25 °C, und vorzugsweise in Kombination mit mindestens einem amorphen, teilkristallinen oder kristallinen Polyol eingesetzt werden.

Die Polyester- und Polycarbonatdi- und -triole weisen vorteilhaft ein Molekulargewicht von 500 bis 5'000 g/mol auf.

Ein bei Raumtemperatur festes Polyurethanpolymer **PUP1** kann kristallin, teilkristallin oder amorph sein. Für ein teilkristallines oder amorphes Polyurethanpolymer **PUP1** gilt dabei, dass es bei Raumtemperatur nicht oder nur wenig fliessfähig ist, das heisst insbesondere, dass es bei 20 °C eine Viskosität von mehr als 5'000 Pa·s aufweist.

Das Polyurethanpolymer **PUP1** weist bevorzugt ein mittleres Molekulargewicht von 1'000 bis 10'000 g/mol, insbesondere von 2'000 bis 5'000 g/mol, auf.

Ein zur Umsetzung mit mindestens einem Dialdimin **A** geeignetes Polyisocyanat der Formel (V) ist in einer weiteren Ausführungsform ein oligomeres Polyisocyanat **PI,** welches aus einem aliphatischen, cycloaliphatischen oder aromatischen Diisocyanat hergestellt wird.

Als Polyisocyanat **PI** eignen sich Oligomere oder Oligomerengemische von Diisocyanaten, insbesondere von HDI, IPDI, TDI und MDI. Kommerziell erhältliche Typen sind insbesondere HDI-Biurete, beispielsweise als Desmodur® N 100 und N 3200 (Bayer), Tolonate® HDB und HDB-LV (Rhodia) und Duranate® 24A-100 (Asahi Kasei); HDI-Isocyanurate, beispielsweise als Desmodur® N 3300, N 3600 und N 3790 BA (alle von Bayer), Tolonate® HDT, HDT-LV und HDT-LV2 (Rhodia), Duranate® TPA-100 und THA-100 (Asahi Kasei) und Coronate® HX (Nippon Polyurethane); HDI-Uretdione, beispielsweise als Desmodur® N 3400 (Bayer); HDI-Iminooxadiazindione, beispielsweise als Desmodur® XP 2410 (Bayer); HDI-Allophanate, beispielsweise als Desmodur® VP LS 2102 (Bayer); IPDI-Isocyanurate, beispielsweise in Lösung als Desmodur® Z 4470 (Bayer) oder in fester Form als Vestanat® T1890/100 (Degussa); TDI-Oligomere, beispielsweise als Desmodur® IL (Bayer); gemischte Isocyanurate auf Basis TDI / HDI, zum Beispiel als Desmodur® HL (Bayer).

Als Polyisocyanat **PI** bevorzugt sind die Oligomere von HDI und/oder IPDI, insbesondere die Isocyanurate.

Die vorgenannten Polyisocyanate **PI** stellen üblicherweise Gemische von Substanzen mit unterschiedlichen Oligomerisationsgraden und/oder chemischen Strukturen dar. Vorzugsweise weisen sie eine mittlere NCO-Funktionalität von 2.1 bis 4.0 auf und enthalten insbesondere Isocyanurat-, Iminooxadiazindion-, Uretdion-, Urethan-, Biuret-, Allophanat-, Carbodiimid-, Uretonimin- oder Oxadiazintrion-Gruppen.

Ebenfalls möglich ist, dass ein zur Umsetzung mit mindestens einem Dialdimin **A** geeignetes Polyisocyanat der Formel (V) eine Mischung bestehend aus mindestens einem Polyurethanpolymer **PUP** und mindestens einem Polyisocyanat **PI** ist.

Bevorzugt ist das zur Umsetzung mit mindestens einem Dialdehyd **A** geeignete Polyisocyanat der Formel (V) ein Isocyanatgruppen aufweisendes Polyurethanpolymer **PUP.** Besonders bevorzugt ist das Polyisocyanat der Formel (V) ein bei Raumtemperatur festes Polyurethanpolymer **PUP1.**

Bei der Umsetzung von mindestens einem Dialdimin **A** der Formel (IV a) oder (IV b), mit mindestens einem Polyisocyanat der Formel (V) in Gegenwart einer unterstöchiometrischen Menge Wasser zur Herstellung einer Isocyanatgruppen und Aldiminogruppen aufweisenden Verbindung **VB** der Formel (I) beträgt die unterstöchiometrische Menge Wasser bevorzugt nicht mehr als 0.5 mol, insbesondere nicht mehr als 0.3 mol, Wasser pro Equivalent Aldiminogruppen. Gegebenenfalls kann diese Umsetzung in Gegenwart eines Katalysators, beispielsweise einer Säure, insbesondere einer Carbonsäure, erfolgen.

Die Dialdimine **A** haben die Eigenschaft, dass sie unter geeigneten Bedingungen, insbesondere unter Ausschluss von Feuchtigkeit, lagerstabil sind. Bei Zutritt von Feuchtigkeit können ihre Aldiminogruppen über Zwischenstufen formal zu Aminogruppen hydrolysieren, wobei der entsprechende, zur Herstellung des Aldimins verwendete, Aldehyd freigesetzt wird. Da diese Hydrolysereaktion reversibel ist und das chemische Gleichgewicht deutlich auf der Aldiminseite liegt, ist davon auszugehen, dass in Abwesenheit von gegenüber Aminen reaktiven Gruppen nur ein Teil der Aldiminogruppen hydrolysieren. In Gegenwart von Isocyanatgruppen verschiebt sich das Hydrolysegleichgewicht, da die hydrolysierenden Aldiminogruppen mit den Isocyanatgruppen irreversibel zu Harnstoffgruppen reagieren. Die Reaktion der Isocyanatgruppen mit den hydrolysierenden Aldiminogruppen muss dabei nicht notwendigerweise über freie Aminogruppen erfolgen. Es sind auch Reaktionen mit Zwischenstufen der Hydrolysereaktion möglich. Beispielsweise ist es denkbar, dass eine hydrolysierende Aldiminogruppe in der Form eines Halbaminals direkt mit einer Isocyanatgruppe reagiert. Wird ein Dialdimin **A** in Anwesenheit einer unterstöchiometrischen Menge Wasser mit einem Polyisocyanat der Formel (V) in Kontakt gebracht, so entstehen Aldiminogruppenhaltige Verbindungen. Die zwei Aldiminogruppen des Dialdimins **A** der Formel (IV a) oder (IV b) weisen einen deutlichen Reaktivitätsunterschied auf, dadurch reagiert bevorzugt die reaktivere Aldiminogruppe unter Hydrolyse mit den Isocyanatgruppen, während die weniger reaktive Aldiminogruppe weitgehend erhalten bleibt. Auf diese Weise werden die vorgängig beschriebenen Verbindungen **VB** der Formel (I) mit einiger Selektivität gebildet. Je grösser der Reaktivitätsunterschied zwischen den Aldiminogruppen des Dialdimins **A** ist, desto selektiver wird die Verbindung **VB** gebildet.

Wie beschrieben, beruhen die Dialdimine **A** der Formeln (IV a) oder (IV b) auf asymmetrischen Diaminen **DA** der Formel (VI) und Aldehyden **ALD** der Formeln (VII a) oder (VII b). Die in der unterschiedlichen Substitution begründete unterschiedliche Reaktivität der beiden Aminogruppen in einem Diamin **DA** überträgt sich direkt auf ein Dialdimin dieses Diamins **DA,** in dem die beiden Aldiminogruppen ebenfalls eine unterschiedliche Reaktivität aufweisen. Im besonderen Fall der Dialdimine **A** wird der Reaktivitätsunterschied in den Aldiminogruppen, bedingt durch die sterisch anspruchsvolle Struktur des der Aldiminogruppe zugrunde liegenden Aldehyds **ALD,** vermutlich sogar noch verstärkt, indem der sterisch anspruchsvolle Aldehyd-Rest die Zugänglichkeit der Aldiminogruppen - insbesondere, wenn diese in halbhydrolysierter Form als Halbaminal-Gruppen vorliegen - zusätzlich einschränkt und dadurch die Reaktivität der langsameren Aldiminogruppe gegenüber jener der schnelleren Aldiminogruppe überproportional erniedrigt.

Es ist nicht ausgeschlossen, dass bei dieser Umsetzung auch Nebenprodukte entstehen. Dies sind beispielsweise Verbindungen der Formel (X).

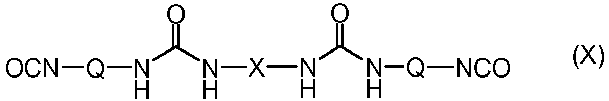

In der Formel (X) weisen Q und X die bereits genannten Bedeutungen auf.

Diese Verbindungen der Formel (X) bilden sich aufgrund der Verwendung eines asymmetrischen Dialdimins **A,** bzw. des asymmetrischen Diamins **DA,** jedoch nur in kleinen Mengen.

Für die beschriebene Umsetzung zur Herstellung einer Isocyanatgruppen und Aldiminogruppen aufweisenden Verbindung **VB** der Formel (I) wird das Polyisocyanat der Formel (V) entweder zuerst mit dem Dialdimin **A** der Formel (IV a) oder (IV b) vermischt und diese Mischung anschliessend mit dem Wasser versetzt, oder das Polyisocyanat wird direkt mit einer vorgängig hergestellten Mischung aus dem Dialdimin **A** und dem Wasser vermischt. Entscheidend für die Bildung der Verbindung **VB** ist der Umstand, dass das teilweise hydrolysierende Dialdimin **A** mit vorhandenen Isocyanatgruppen des Polyisocyanats reagiert, wobei der gewünschte Umsetzungsgrad über die eingesetzte Wassermenge gesteuert wird. Unbedingt zu vermeiden ist, dass das Polyisocyanat mit Wasser in Kontakt kommt, ohne dass das Dialdimin **A** als Reaktionspartner anwesend ist. Die Umsetzung kann bei für Reaktionen mit Isocyanatgruppen üblichen Bedingungen erfolgen, gegebenenfalls in Anwesenheit mindestens eines geeigneten Katalysators. Bevorzugt wird die Umsetzung bei einer Temperatur von 20 bis 150 °C geführt. Für den Fall, dass das Polyisocyanat der Formel (V) ein bei Raumtemperatur festes Polyurethanpolymer **PUP1** ist, wird die Umsetzung bevorzugt bei einer Temperatur geführt, bei welcher ein solches Polyurethanpolymer **PUP1** flüssig ist.

Bei der beschriebenen Umsetzung beträgt das Verhältnis zwischen dem Wasser und den Aldiminogruppen des Dialdimins **A** vorteilhaft höchstens 0.5, insbesondere 0.3 bis 0.5, mol Wasser pro Equivalent Aldiminogruppen.

Bei der beschriebenen Umsetzung beträgt das Verhältnis zwischen der Anzahl Isocyanatgruppen des Polyisocyanats der Formel (V) zu der Anzahl Aldiminogruppen des Dialdimins **A** vorteilhaft mindestens 1, bevorzugt 1 bis 5.

Nach der Umsetzung mit dem Wasser beträgt das Verhältnis zwischen der Anzahl aller in der Zusammensetzung vorhandenen Aldiminogruppen und der Anzahl aller in der Zusammensetzung vorhandenen Isocyanatgruppen vorteilhaft 0.1 bis 1.1, bevorzugt 0.2 bis 1.0, besonders bevorzugt 0.2 bis 0.9.

Die Verbindung **VB** in der beschriebenen Weise über ein Dialdimin **A** herzustellen, scheint einem unnötigen Umweg gleichzukommen und ist deshalb nicht nahe liegend. Nahe liegender und scheinbar vorteilhafter wäre die Verwendung eines nur einseitig ins Aldimin überführten Diamins **DA,** das heisst eines Aminoaldimins, welches ein Monoaldimin mit einer primären Aminogruppe darstellt, da sich ein solches Monoaldimin direkt an das Polyisocyanat addieren lässt.

Bei näherer Betrachtung dieses vermeintlich vorteilhafteren Syntheseweges offenbaren sich aber grosse Schwächen. Zum einen sind die gewünschten Monoaldimine nicht einfach in reiner Form erhältlich, weil sie aus den Diaminen meist wenig selektiv gebildet und als Mischungen mit den Dialdiminen und nicht umgesetzten Diaminen erhalten werden, oder weil sie zu Folgereaktionen neigen können, insbesondere zur Cyclisierung, beispielsweise unter Bildung von Aminalen, oder zu Additionsreaktionen, beispielsweise unter Amidbildung, etwa wenn die Monoaldimine Estergruppen aufweisen. Zum anderen reagieren die Monoaldimine, aufgrund der überaus schnellen Reaktion zwischen primären Aminogruppen und Isocyanatgruppen, äusserst heftig mit dem Polyisocyanat und führen beim Einmischen zu inhomogenen Addukten von schlechter Qualität. Der hier vorgängig beschriebene Reaktionsweg unter Verwendung eines Dialdimins **A** zu Verbindungen **VB** der Formel (I) umgeht diese Schwierigkeiten auf elegante Art. Dialdimine **A** lassen sich homogen in ein Polyisocyanat einmischen.

Die Isocyanatgruppen und Aldimingruppen aufweisenden Verbindungen **VB** der Formel (I) haben die Eigenschaft, dass ihre Aldiminogruppen nicht zu Enaminogruppen tautomerisieren können, da sie als Substituenten in α-Stellung zum C-Atom der Aldiminogruppe keinen Wasserstoff enthalten. Aufgrund dieser Eigenschaft bilden sie zusammen mit Isocyanatgruppen besonders lagerfähige, das heisst weitgehend viskositätsstabile, Mischungen, auch wenn in diesen Mischungen hochreaktive aromatische Isocyanatgruppen, wie diejenigen abgeleitet von TDI und MDI, vorhanden sind.

Unter dem Einfluss von Feuchtigkeit reagiert die Verbindung **VB** der Formel (I) dadurch, dass die Isocyanatgruppen mit den durch die Feuchtigkeit hydrolysierenden Aldiminogruppen, sowie die Isocyanatgruppen untereinander, reagieren. Für den Fall, dass der Index u in der Formel (I) grösser oder gleich dem Index v ist, ist die Verbindung **VB** mittels Feuchtigkeit selbsthärtend. Das heisst, durch die Einwirkung von Feuchtigkeit kann die Verbindung **VB** auch allein zu einem hochmolekularen Polyurethan-Kunststoff vernetzen. Es ist in diesem Fall möglich, eine feuchtigkeitshärtende Zusammensetzung ohne ein Polyisocyanat **P,** wie es im Folgenden ausgeführt wird, zu erhalten.

Die Verbindung **VB** ist lagerstabil, d.h. sie kann unter Ausschluss von Feuchtigkeit in einer geeigneten Verpackung oder Anordnung, wie beispielsweise einem Fass, einem Hobbock, einem Eimer, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität ermittelt.

Einen weiteren Aspekt der vorliegenden Erfindung betrifft eine Zusammensetzung, umfassend
a) mindestens eine der vorgängig beschriebene Isocyanatgruppen und Aldiminogruppen aufweisende Verbindung **VB** der Formel (I), insbesondere hergestellt nach dem vorgängig beschriebenen Verfahren, und
b) mindestens ein Polyisocyanat **P.**

In einer Ausführungsform ist das Polyisocyanat **P ein** Isocyanatgruppen aufweisendes Polyurethanpolymer **PUP,** wie es bereits vorgängig für die Verbindung **VB** der Formel (I), bzw. bei deren Herstellung, beschrieben wurde. In einer weiteren Ausführungsform ist das Polyisocyanat **P ein** oligomers Polyisocyanat **PI,** wie es ebenfalls bereits vorgängig für die Verbindung **VB** der Formel (I), bzw. bei deren Herstellung, beschrieben wurde. Bevorzugt ist das Polyisocyanat **P** ein Isocyanatgruppen aufweisendes Polyurethanpolymer **PUP.** Besonders bevorzugt ist das in der Zusammensetzung vorhandene Polyisocyanat **P** das gleiche Polyisocyanat wie das (u+v) endständige Isocyanatgruppen aufweisende Polyisocyanat, von dem Q in der Verbindung **VB** der Formel (I) abgeleitet ist.

Bevorzugt ist eine solche Zusammensetzung erhältlich, indem mindestens ein Polyisocyanat der Formel (V) und mindestens ein Dialdimin **A** und Wasser in einem solchen Verhältnis eingesetzt wird, dass nach der Umsetzung ein Rest des Polyisocyanats der Formel (V) als Polyisocyanat **P** in der Zusammensetzung verbleibt.

Die beschriebene Zusammensetzung weist einen niedrigen Gehalt an monomeren Diisocyanaten auf.

Es hat sich völlig überraschend gezeigt, dass die Umsetzung eines Polyisocyanats der Formel (V), welches einen bestimmten Gehalt an monomerem Diisocyanat aufweist, mit einem Dialdimin **A** in Anwesenheit einer unterstöchiometrischen Menge Wasser in der vorgängig beschriebenen Weise zu einer Zusammensetzung führt, die einen überraschend niedrigen Gehalt an monomeren Diisocyanaten aufweist. Dieser liegt deutlich tiefer als jener des Polyisocyanats der Formel (V) vor der Umsetzung.

Der überraschend niedrige Gehalt an monomeren Diisocyanaten wird vermutlich dadurch erreicht, dass bei der beschriebenen Umsetzung mindestens eines Polyisocyanats der Formel (V), insbesondere mindestens eines Polyurethanpolymeres **PUP,** mit mindestens einem Dialdimin **A** in Anwesenheit einer unterstöchiometrischen Menge Wasser zu mindestens einer Verbindung **VB** der Formel (I) die hydrolysierenden Aldiminogruppen des Dialdimins **A** bevorzugt mit den im Polyisocyanat, insbesondere einem Polyurethanpolymer **PUP,** vorhandenen monomeren Diisocyanaten reagieren. Auf diese Weise wird ein grosser Teil der ursprünglich vorhandenen Diisocyanat-Monomere umgesetzt, wodurch der Gehalt an monomeren Diisocyanaten der Zusammensetzung stark reduziert wird.

Die so erhaltene Zusammensetzung mit niedrigem Isocyanat-Monomergehalt vernetzt bei Kontakt mit Feuchtigkeit, beispielsweise aus der Luft, zu einem hochmolekularen Kunststoff. Von grossem Vorteil bei dieser Vernetzung ist dabei der Umstand, dass die Reaktionsprodukte aus der Umsetzung des Polyisocyanates der Formel (V) mit dem Dialdimin **A** alle mindestens difunktionell in Bezug auf die Vernetzungsreaktion mit Wasser sind, was eine saubere Aushärtung zur Folge hat. Würde ein Polyisocyanat der Formel (V) mit einer monofunktionellen Verbindung, beispielsweise einem Monoalkohol ohne weitere Reaktivgruppen, in der beschriebenen Weise umgesetzt, so wäre ebenfalls eine Reduktion des Monomergehalts zu erwarten. Die gebildeten Umsetzungsprodukte wären aber alle monofunktionell in Bezug auf die Vernetzungsreaktion mit Feuchtigkeit, was nach erfolgter Aushärtung schlecht vernetzte Kunststoffe mit unbefriedigenden Eigenschaften erwarten lässt. Weiterhin ist der Umstand von grossem Vorteil, dass die im beschriebenen Verfahren umgesetzten Diisocyanat-Monomere bei der Aushärtung der Zusammensetzung ins vernetzte Polymer miteingebaut werden.

Der Gehalt an monomeren Diisocyanaten in der beschriebenen Zusammensetzung beträgt insbesondere ≤ 1.0 Gewichts-%, bevorzugt ≤ 0.5 Gewichts-%, bezogen auf die Summe der feuchtigkeitsreaktiven Bestandteile der Zusammensetzung.

Die beschriebene Zusammensetzung enthält vorzugsweise mindestens 20 Gewichts-% der Verbindung **VB** der Formel (I) bezogen auf die Summe der Verbindung **VB** der Formel (I) und des Polyisocyanats **P.**

Die Gewichtssumme der Verbindung der Formel (I) und des Polyisocyanats **P** ist vorteilhaft in einer Menge von 5 bis 100 Gewichts-%, bevorzugt in einer Menge von 10 bis 100 Gewichts-%, bezogen auf die gesamte Zusammensetzung, vorhanden.

Bevorzugt ist der Anteil des Polyisocyanats **P** in der beschriebenen Zusammensetzung mindestens so gross, dass die Zusammensetzung mindestens soviele Isocyanatgruppen wie Aldiminogruppen aufweist, so dass durch die Einwirkung von Feuchtigkeit ein hochmolekularer Polyurethan-Kunststoff gebildet wird.

Die beschriebene Zusammensetzung kann zusätzlich zu mindestens einer Aldiminogruppen aufweisenden Verbindung **VB** der Formel (I) und zu mindestens einem Polyisocyanat **P** gegebenenfalls weitere Hilfs- und Zusatzstoffe enthalten. Dafür sind beispielsweise die folgenden Substanzen geeignet:
- Weichmacher, beispielsweise Carbonsäureester wie Phthalate, beispielsweise Dioctylphthalat, Diisononylphthalat oder Diisodecylphthalat, Adipate, beispielsweise Dioctyladipat, Azelate und Sebacate, organische Phosphor- und Sulfonsäureester oder Polybutene;
- Lösemittel;
- anorganische und organische Füllstoffe, zum Beispiel gemahlene oder gefällte Calciumcarbonate, welche gegebenenfalls mit Stearaten beschichtet sind, Russe, insbesondere industriell hergestellte Russe (im Folgenden als "Russ" bezeichnet), Baryt (BaSO₄, auch Schwerspat genannt), Kaoline, Aluminiumoxide, Aluminiumhydroxide, Kieselsäuren, insbesondere hochdisperse Kieselsäuren aus Pyrolyseprozessen, PVC-Pulver oder Hohlkugeln;
- Fasern, beispielsweise aus Polyethylen;
- Pigmente, beispielsweise Titandioxid oder Eisenoxide;
- Katalysatoren, welche die Hydrolyse der Aldimine beschleunigen, wie beispielsweise organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester;
- Katalysatoren, welche die Reaktion der Isocyanatgruppen beschleunigen, beispielsweise Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismuttris(neo-decanoat), und tertiäre Aminogruppen enthaltende Verbindungen wie 2,2'-Dimorpholinodiethylether und 1,4-Diazabicyclo[2.2.2]octan;
- Rheologie-Modifizierer wie beispielsweise Verdickungsmittel, zum Beispiel Harnstoffverbindungen, Polyamidwachse, Bentonite oder pyrogene Kieselsäuren;
- Reaktivverdünner und Vernetzer, beispielsweise monomere Polyisocyanate wie MDI, TDI, Gemische aus MDI und MDI-Homologen (polymeres MDI oder PMDI), sowie Oligomere dieser Polyisocyanate, insbesondere in Form von Isocyanuraten, Carbodiimiden, Uretoniminen, Biureten, Allophanaten oder Iminooxadiazindionen, Addukte monomerer Polyisocyanate mit kurzkettigen Polyolen, sowie Adipinsäuredihydrazid und andere Dihydrazide;
- weitere latente Härter mit geschützten Aminogruppen, wie beispielsweise Ketimine, Oxazolidine, Enamine oder andere Aldimine;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane wie beispielsweise Epoxysilane, Vinylsilane, (Meth)acrylsilane, Isocyanatosilane, Carbamatosilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, darauf zu achten, dass solche Zusätze die Lagerstabilität der Zusammensetzung nicht beeinträchtigen. Das heisst, dass diese Zusätze während der Lagerung die zur Vernetzung führenden Reaktionen wie Hydrolyse der Aldiminogruppen oder Vernetzung der Isocyanatgruppen nicht in signifikantem Ausmass auslösen dürfen. Insbesondere bedeutet dies, dass all diese Zusätze kein oder höchstens Spuren von Wasser enthalten sollten. Es kann sinnvoll sein, gewisse Zusätze vor dem Einmischen in die Zusammensetzung chemisch oder physikalisch zu trocknen.

Bevorzugt enthält die beschriebene Zusammensetzung neben mindestens einer Verbindung **VB** und mindestens einem Polyisocyanat **P** mindestens einen Katalysator in Form einer der genannten organischen Säuren wie insbesondere Benzoesäure oder Salicylsäure und/oder in der Form einer der genannten metallorganischen Verbindungen und/oder in der Form einer der genannten tertiäre Aminogruppen enthaltenden Verbindungen.

Die beschriebene Zusammensetzung wird unter Ausschluss von Feuchtigkeit aufbewahrt. Sie ist lagerstabil, d.h. sie kann unter Ausschluss von Feuchtigkeit in einer geeigneten Verpackung oder Anordnung, wie beispielsweise einem Fass, einem Hobbock, einem Eimer, einem Beutel oder einer Kartusche über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität ermittelt.

Die Aldiminogruppen der Verbindung **VB** und gegebenenfalls vorhandene weitere Aldiminogruppen haben die Eigenschaft, bei Kontakt mit Feuchtigkeit zu hydrolysieren. Die in der Zusammensetzung vorhandenen Isocyanatgruppen reagieren formal mit den bei der Hydrolyse der Aldiminogruppen frei werdenden Aminogruppen, wobei der entsprechende Aldehyd der Formel (VII a) oder (VII b) freigesetzt wird. Im Verhältnis zu den Aldiminogruppen überschüssige Isocyanatgruppen reagieren mit vorhandenem Wasser. Als Ergebnis dieser Reaktionen härtet die Zusammensetzung zu einem hochmolekularen Kunststoff aus; dieser Prozess wird auch als Vernetzung bezeichnet. Die Reaktion der Isocyanatgruppen mit den hydrolysierenden Aldiminogruppen muss dabei nicht notwendigerweise über die Aminogruppen erfolgen. Selbstverständlich sind auch Reaktionen mit Zwischenstufen der Hydrolyse der Aldiminogruppen zu Aminogruppen möglich. Beispielsweise ist es denkbar, dass hydrolysierende Aldiminogruppen in der Form von Halbaminalen direkt mit den Isocyanatgruppen reagieren. Bei einer Heissschmelzklebstoff-Zusammensetzung bewirkt dies eine Vernetzung, wodurch die Zusammensetzung nicht mehr aufschmelzbar ist. Sind in der Zusammensetzung ausschliesslich Aldiminogruppen ausgehend von den erwähnten, besonders bevorzugten geruchsfreien Aldehyden der Formel (VII a) vorhanden, so entsteht bei der Aushärtung der Zusammensetzung kein störender Geruch, was für viele Anwendungen ein grosser Vorteil oder sogar eine unabdingbare Voraussetzung ist, insbesondere für Anwendungen in geschlossenen Räumen, wie im Innern von Gebäuden oder von Fahrzeugen, oder für grossflächige Anwendungen wie beispielsweise Bodenbeschichtungen, oder für Anwendungen bei erhöhter Temperatur, wie beispielsweise Heissschmelzklebstoffe.

Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Besprühen, oder es kann der Zusammensetzung bei der Applikation eine Wasser enthaltende Komponente zugesetzt werden.

Die Zusammensetzung härtet bei Kontakt mit Feuchtigkeit ohne die Bildung von Blasen aus. Die Aushärtungsgeschwindigkeit lässt sich über die Art und Menge eines oder mehrerer gegebenenfalls vorhandener Katalysatoren sowie über die bei der Aushärtung herrschende Temperatur beeinflussen.

Die beschriebene Zusammensetzung kann für verschiedenste Zwecke verwendet werden. Beispielsweise ist sie geeignet als Klebstoff für das Verkleben von diversen Substraten, beispielsweise zum Verkleben von Bauteilen bei der Herstellung von Automobilen, Schienenfahrzeugen, Schiffen oder anderen industriellen Gütern, insbesondere als reaktiver Heissschmelzklebstoff, als Dichtstoff aller Art, beispielsweise zum Abdichten von Fugen im Bau, sowie als Beschichtung oder Belag für diverse Artikel beziehungsweise variable Substrate. Als Beschichtungen bevorzugt sind Schutzanstriche, Versiegelungen, Schutzbeschichtungen und Primer. Unter den Belägen sind besonders Bodenbeläge als bevorzugt zu nennen. Solche Beläge werden hergestellt, indem die Zusammensetzung typischerweise auf den Untergrund gegossen und egalisiert wird, wo sie zu einem Bodenbelag aushärtet. Beispielsweise werden solche Bodenbeläge für Büros, Wohnbereiche, Spitäler, Schulen, Lagerhallen, Parkgaragen und andere private oder industrielle Anwendungen eingesetzt.

In einer bevorzugten Ausführungsform wird die beschriebene Zusammensetzung als Dichtstoff oder als Klebstoff, insbesondere als reaktiver Heissschmelzklebstoff, eingesetzt.

Besonders geeignet sind die beschriebenen Zusammensetzungen für Anwendungen, in welchen ein niedriger Gehalt an monomeren Diisocyanaten gefordert ist. Dies sind insbesondere Anwendungen, bei welcher die Zusammensetzung gespritzt wird, und Anwendungen, bei welcher die Zusammensetzung bei erhöhter Temperatur appliziert wird, beispielsweise als Heissschmelzklebstoff.

Ein weiterer Aspekt der vorliegenden Erfindung betrifft ein Verfahren zum Verkleben von einem Substrat **S1** mit einem Substrat **S2,** welches die Schritte umfasst:
i) Applikation einer der vorgängig beschriebenen Zusammensetzung auf ein Substrat **S1;**
ii) Kontaktieren der applizierten Zusammensetzung mit einem Substrat **S2** innerhalb der Offenzeit der Zusammensetzung;
oder
i') Applikation einer der vorgängig beschriebenen Zusammensetzung auf ein Substrat **S1** und auf ein Substrat **S2;**
ii') Kontaktieren der applizierten Zusammensetzung miteinander innerhalb der Offenzeit der Zusammensetzung;
wobei das Substrat **S2** aus dem gleichen oder einem unterschiedlichen
Material wie das Substrat **S1** besteht.

Es ist hierbei ist wichtig, darauf zu achten, dass das Fügen der Teile innerhalb der so genannten Offenzeit erfolgt, um zu gewährleisten, dass beide Fügeteile verlässlich miteinander verklebt werden.

In der Anwendung als Dichtstoff wird die Zusammensetzung zwischen die Substrate **S1** und **S2** appliziert und anschliessend erfolgt die Aushärtung. Üblicherweise wird der Dichtstoff in eine Fuge eingepresst.

In beiden Anwendungen kann das Substrat **S1** gleich oder verschieden von Substrat **S2** sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze, Polyurethanen (PUR); beschichtete Substrate wie pulverbeschichtete Metalle oder Legierungen; sowie Farben und Lacke, insbesondere Automobillacke.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Unter einem "Primer" wird im vorliegenden Dokument eine als Voranstrich geeignete Zusammensetzung verstanden, die neben nichtreaktiven flüchtigen Stoffen und optional festen Zuschlägen mindestens ein Polymer und/oder mindestens eine Substanz mit reaktiven Gruppen enthält und die befähigt ist, bei der Applikation auf einem Substrat zu einem festen, gut haftenden Film in einer Schichtdicke von typischerweise mindestens 10 µm auszuhärten, wobei die Aushärtung entweder allein durch das Verdampfen der nichtreaktiven flüchtigen Stoffe, wie beispielsweise Lösemittel oder Wasser, oder durch eine chemische Reaktion, oder durch eine Kombination dieser Faktoren, zustande kommt, und welche eine gute Haftung zu einer nachfolgend aufgebrachten Schicht, beispielsweise einem Kleb- oder Dichtstoff, aufbaut.

Die Applikation der Zusammensetzung kann in einem breiten Temperaturspektrum erfolgen. Beispielsweise kann die Zusammensetzung bei Raumtemperatur appliziert werden, wie es für einen elastischen Klebstoff oder einen Dichtstoff typisch ist. Die Zusammensetzung kann aber auch bei tieferen wie auch bei höheren Temperaturen appliziert werden. Letzteres ist insbesondere dann vorteilhaft, wenn die Zusammensetzung hochviskose oder schmelzbare Komponenten enthält, wie sie in Schmelzklebstoffen, beispielsweise Warmschmelzklebstoffen (Warm-Melt) oder Heissschmelzklebstoffen (Hot-Melt) typischerweise vorhanden sind. Die Applikationstemperaturen liegen für Warm-Melts beispielsweise im Bereich von 40 bis 80 °C, bei Hot-Melts im Bereich von 85 bis 200 °C.

Somit wird im Falle eines Warm-Melts die Zusammensetzung vor der Applikation auf eine Temperatur 40 °C bis 80 °C, insbesondere von 60 °C bis 80 °C, aufgeheizt und wird insbesondere bei dieser Temperatur in Schritt i) oder i') des oben beschriebenen Verfahrens appliziert. Im Falle eines Hot-Melts wird die Zusammensetzung vor der Applikation auf eine Temperatur von 85 °C bis 200 °C, insbesondere von 100°C bis 180°C, bevorzugt von 120°C bis 160°C, aufgeheizt und wird insbesondere bei dieser Temperatur in Schritt i) oder i') des oben beschriebenen Verfahrens appliziert.

Aus dem oben beschriebenen Verfahren zum Verkleben, bzw. zum Abdichten, der Substrate **S1** und **S2,** wird ein verklebter oder abgedichteter Artikel erhalten. Ein derartiger Artikel kann ein Artikel der Bau-, Transportmittel-, Möbel-, Textil- oder Verpackungsbranche sein. So kann ein derartiger Artikel ein Bauwerk sein, insbesondere ein Bauwerk des Hoch- oder Tiefbaus, oder ein Transportmittel, beispielsweise ein Fahrzeug zu Wasser oder zu Lande, insbesondere ein Automobil, ein Bus, ein Lastkraftwagen, ein Zug oder ein Schiff, oder ein Anbauteil davon.

Insbesondere falls die Zusammensetzung als Klebstoff für elastische Verklebungen verwendet wird, weist sie bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese eine im Wesentlichen runde oder dreieckige Querschnitts-fläche aufweisen kann. Geeignete Methoden zum Auftragen des Klebstoffes sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikationsroboters. Ein Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Die Zusammensetzung vernetzt mit wenig Wasser rasch und ohne die Bildung von Blasen. Für eine Anwendung beispielsweise als Klebstoff bedeutet dies, dass eine Klebeverbindung schon früh bis zu einem gewissen Grade belastbar ist, auch wenn erst relativ wenig Wasser aus der Umgebung mit der Zusammensetzung in Kontakt gekommen ist. Dies ist in der industriellen Fertigung, beispielsweise in der Montage von Fahrzeugen, ein grosser Vorteil, da angeklebte Bauteile schon nach relativ kurzer Zeit durch die Verklebung in Position gehalten werden sollen, und das geklebte Objekt dadurch ohne weitere Fixierung bewegt und weiter bearbeitet werden kann.

Die ausgehärtete Zusammensetzung, welche durch die Reaktion einer vorgängig beschriebenen Zusammensetzung mit Wasser, insbesondere in Form von Luftfeuchtigkeit, erhalten wird, zeichnet sich über ausgezeichnete Eigenschaften aus. Sie verfügt beispielsweise über eine hohe Dehnbarkeit und eine hohe Zugfestigkeit. Ihr Elastizitätsmodul variiert in Abhängigkeit der zur Herstellung der Zusammensetzung verwendeten Komponenten, wie beispielsweise der Polyole, Polyisocyanate oder Diamine, und lässt sich an die Anforderungen einer bestimmten Applikation anpassen, beispielsweise auf hohe Werte für Klebstoffe oder auf tiefe Werte für Dichtstoffe.

In einer besonders bevorzugten Ausführungsform stellt die beschriebene Zusammensetzung eine reaktive Heissschmelzklebstoff-Zusammensetzung dar. In diesem Fall ist sowohl das für Q der Verbindung VB stehende (u+v) Isocyanatgruppen aufweisende Polyisocyanat, als auch das Polyisocyanat **P,** ein bei Raumtemperatur festes (u+v) Isocyanatgruppen aufweisendes Polyurethanpolymer **PUP1,** wie es vorgängig bereits im Detail beschrieben wurde.

Derartige Heissschmelzklebstoff-Zusammensetzungen sind vorteilhaft ungefüllt. Es ist vorteilhaft, dass in derartigen Heissschmelzklebstoff-Zusammensetzungen die Gewichtssumme der Verbindung der Formel (I) und des Polyisocyanats **P,** insbesondere des bei Raumtemperatur festen Polyurethanpolymers **PUP1,** 40 bis 100 Gewichts-%, insbesondere 75 bis 100 Gewichts-%, bevorzugt 80 bis 100 Gewichts-%, bezogen auf die gesamte Zusammensetzung, vorhanden ist.

Die beschriebene Heissschmelzklebstoff-Zusammensetzung weist einen überraschend niedrigen Gehalt an monomeren Diisocyanaten auf. Dies ist für einen Heissschmelzklebstoff besonders vorteilhaft, da monomere Diisocyanate bei der Applikation ausgasen und als reizende, sensibilisierende oder toxische Stoffe eine Gesundheitsbelastung für den Verarbeiter darstellen können. Der Gehalt an monomeren Diisocyanaten in der beschriebenen Heissschmelzklebstoff-Zusammensetzung beträgt insbesondere ≤ 1.0 Gewichts-%, bevorzugt ≤ 0.5 Gewichts-%, bezogen auf die Summe der feuchtigkeitsreaktiven Bestandteile der Zusammensetzung.

Als gegebenenfalls weitere Bestandteile einer derartigen Heissschmelzklebstoff-Zusammensetzung sind nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat oder höhere Ester davon, und (Meth)acrylat geeignet, wobei Ethylenvinylacetat-Copolymere (EVA), ataktische Poly-α-Olefine (APAO), Polypropylene (PP) und Polyethylene (PE) besonders geeignet.

Für die Wirkungsweise eines reaktiven Heissschmelzklebstoffes ist es wichtig, dass der Klebstoff aufschmelzbar ist, das heisst, dass er bei der Applikationstemperatur eine genügend niedrige Viskosität aufweist, um applizierbar zu sein, und dass er beim Erkalten möglichst schnell eine genügende Klebefestigkeit aufbaut, schon bevor die Vernetzungsreaktion mit Luftfeuchtigkeit abgeschlossen ist (Anfangsfestigkeit). Es hat sich gezeigt, dass die beschriebene Heissschmelzklebstoff-Zusammensetzung bei den üblichen Applikationstemperaturen im Bereich von 85 °C bis 200 °C, typischerweise 120 °C bis 160 °C, eine gut handhabbare Viskosität aufweist, und dass sie beim Erkalten genügend schnell eine gute Klebefestigkeit aufbaut.

Bei der Applikation kommt die beschriebene Heissschmelzklebstoff-Zusammensetzung in Kontakt mit Feuchtigkeit, insbesondere in Form von Luftfeuchtigkeit. Parallel zur physikalischen Erhärtung infolge des Erstarrens beim Abkühlen setzt auch die chemische Vernetzung mit Feuchtigkeit ein, hauptsächlich indem die vorhandenen Aldiminogruppen durch Feuchtigkeit hydrolysieren und in der bereits beschriebenen Weise schnell mit vorhandenen Isocyanatgruppen reagieren. Überschüssige Isocyanatgruppen vernetzen ebenfalls mit Feuchtigkeit in bekannter Weise.

Die für die chemische Vernetzung benötigte Feuchtigkeit kann entweder aus der Luft stammen (Luftfeuchtigkeit), oder aber die Zusammensetzung kann mit einer Wasser enthaltenden Komponente in Kontakt gebracht werden, zum Beispiel durch Bestreichen oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die beschriebene Heissschmelzklebstoff-Zusammensetzung zeigt bei der Vernetzung mit Feuchtigkeit eine stark verminderte Tendenz zur Bildung von Blasen, da bei der Vernetzung durch das Vorhandensein von Aldiminogruppen - je nach Stöchiometrie - wenig oder gar kein Kohlendioxid gebildet wird.

Als Substrate **S1** und/oder **S2** eignen sich beim Verfahren zum Verkleben mittels der beschriebener Heissschmelzklebstoff-Zusammensetzung insbesondere Kunststoffe, organische Materialien wie Leder, Stoffe, Papier, Holz, mit Harz gebundene Holzwerkstoffe, Harz-Texil-Compositewerkstoffe, Glas, Porzellan, Keramik sowie Metalle und Metall-Legierungen, insbesondere lackierte oder pulverbeschichtete Metalle und Metall-Legierungen.

Als Kunststoffe eignen sich hierbei insbesondere Polyvinylchlorid (PVC), Acrylonitril-Butadien-Styrol-Copolymere (ABS), SMC (Sheet Moulding Composites), Polycarbonat (PC), Polyamid (PA), Polyester, Polyoxymethylen (POM), Polyolefine (PO), insbesondere Polyethylen (PE), Polypropylen (PP), Ethylen/Propylen-Copolymere (EPM) und Ethylen/Propylen-Dien-Terpolymere (EPDM), bevorzugt mit Plasma, Corona oder Flammen oberflächenbehandeltes PP oder PE.

Die Dicke der Klebstoffschicht (Verklebungsdicke) beträgt bei Heissschmelzklebstoffen typischerweise 10 Mikrometer oder mehr. Insbesondere liegt die Verklebungsdicke zwischen 10 Mikrometern und 20 Millimetern, vor allem zwischen 80 Mikrometern und 500 Mikrometern. Bei dicken Schichten ist die Vernetzung, bedingt durch die langsame Wasserdiffusion, jedoch üblicherweise sehr langsam.

Die beschriebene Heissschmelzklebstoff-Zusammensetzung wird insbesondere in einem industriellen Fertigungsprozess eingesetzt. Es resultieren insbesondere Artikel aus der Transportmittel-, Möbel- oder Textilbranche. Als Transportmittelbranche bevorzugt ist die Automobilbranche.

Beispielhafte derartige Artikel sind Fahrzeuge zu Wasser oder zu Lande, wie Automobile, Busse, Lastkraftwagen, Züge oder Schiffe; Automobil-Innenausstattungsteile, wie Dachhimmel, Sonnenblende, Instrumententafel, Türseitenteil, Hutablage und dergleichen; Holzfaserwerkstoffe aus dem Duschen- und Badbereich; Möbel-Dekorfolien, Membranfolien mit Textilien wie Baumwolle, Polyesterfolien im Bekleidungsbereich oder Textilien mit Schäumen für Autoausstattungen.

Andererseits sind derartige Artikel insbesondere Artikel aus der Verpackungsbranche.

Die beschriebene Heissschmelzklebstoff-Zusammensetzung weist eine Reihe von Vorteilen gegenüber dem Stand der Technik auf.

Sie weist einen stark verminderten Gehalt an monomeren Diisocyanaten auf und führen dadurch bei ihrer Verwendung zu einer stark reduzierten Belastung des Verarbeiters mit gesundheitsschädlichen Diisocyanat-Dämpfen. Mit den beschriebenen Zusammensetzungen sind auf handelsüblichen, gut erhältlichen Diisocyanaten wie 4,4'-MDI oder IPDI basierende Heissschmelzklebstoff-Zusammensetzungen mit äusserst niedrigem Gehalt an monomeren Diisocyanaten zugänglich.

Weiterhin verfügt die beschriebene Heissschmelzklebstoff-Zusammensetzung über eine hohe Vernetzungsgeschwindigkeit, auch wenn sie nur langsam reagierende aliphatische Isocyanatgruppen, wie beispielsweise jene von IPDI oder H₁₂MDI, enthält. Auf rein aliphatischen Diisocyanaten basierende reaktive Heissschmelzklebstoffe nach dem Stand der Technik weisen im Allgemeinen eine so niedrige Vernetzungsgeschwindigkeit auf, dass sie für die viele Anwendungen nicht einsetzbar sind.

Weiterhin zeigt die beschriebene Heissschmelzklebstoff-Zusammensetzung eine stark verminderte Tendenz zur Bildung von Blasen, denn bei der Vernetzungsreaktion von Isocyanatgruppen mit hydrolysierenden Aldiminogruppen wird kein Kohlendioxid gebildet, im Gegensatz zur Vernetzung von Isocyanatgruppen mit Feuchtigkeit.

Neben diesen Vorteilen zeigen die beschriebenen Heissschmelzklebstoff-Zusammensetzungen ähnlich gute Eigenschaften wie die Systeme nach dem Stand der Technik, nämlich eine schnelle Klebefestigkeit, eine gute Wärmestandfestigkeit und eine hohe Endfestigkeit bei einer guten Dehnbarkeit, wobei die mechanischen Endeigenschaften sich in einem sehr breiten Bereich an die Bedürfnisse einer Klebeanwendung anpassen lassen.

Ein besonders bedeutender Aspekt der vorliegenden Erfindung betrifft ein Verfahren zur Verminderung des Gehalts an monomeren Diisocyanaten in Isocyanatgruppen aufweisenden Polyurethanpolymeren oder in oligomeren Polyisocyanaten, oder in Zusammensetzungen, welche Isocyanatgruppen aufweisende Polyurethanpolymere oder oligomere Polyisocyanate enthalten, in dem diese mit mindestens einem Polyaldimin **A'** der Formel (IV a') oder (IV b') in Gegenwart einer unterstöchiometrischen Menge Wasser, insbesondere weniger als 0.5 mol Wasser pro Equivalent Aldiminogruppen, umgesetzt werden. Dieses Verfahren ist somit nicht limitiert auf die vorgängig beschriebenen "asymmetrischen" Polyaldimine **A** der Formel (IV a) oder (IV b), sondern es wurde gefunden, dass dies auch bei nicht asymmetrischen Polyaldiminen zur gewünschten Verminderung des Gehalts an monomeren Diisocyanaten führt.

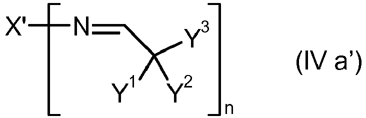

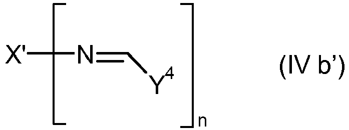

In den Formeln (IV a') und (IVb') steht X' für den Rest eines Polyamins **DA'** mit n primären Aminogruppen nach der Entfernung dieser n Aminogruppen, und n steht für einen Wert von 2 bis 6, insbesondere von 2 oder 3, bevorzugt von 2. Y¹, Y², Y³ und Y⁴ weisen die bereits bei Formel (I) erwähnten Bedeutungen auf.

Die Polyamine **DA'** weisen n primäre Aminogruppen auf. Abgesehen von diesen n Aminogruppen sind die Polyamine **DA'** frei von Gruppierungen, die mit Isocyanatgruppen reaktionsfähig sind; insbesondere weisen sie keine Hydroxylgruppen, keine sekundären Aminogruppen und keine Mercaptogruppen auf

Als Polyamin **DA'** sind neben den bereits erwähnten "asymmetrischen" Diaminen **DA** beispielsweise die folgenden Diamine und Triamine geeignet:
- Aliphatische Diamine wie Ethylendiamin, 1,3-Propandiamin, 2-Methyl-1,2-propandiamin, 2,2-Dimethyl-1,3-propandiamin, 1,4-Butandiamin, 1,5-Pentandiamin, 1,6-Hexamethylendiamin, 1,7-Heptandiamin, 1,8-Octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 2,5-Dimethyl-1,6-hexamethylendiamin;
- Cycloaliphatische Diamine wie 1,3- und 1,4-Diaminocyclohexan, Bis-(4-aminocyclohexyl)-methan,Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 2- Methyl-1,3-diaminocyclohexan, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 3,9-Bis-(3-aminopropyl)-2,4,8,10-tetra-oxaspiro[5.5]undecan, 1,3- und 1,4-Xylylendiamin;
- Ethergruppen-haltige aliphatische Diamine wie Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin und höhere Oligomere dieser Diamine;
- Polyoxyalkylen-Diamine, welche typischerweise Produkte aus der Aminierung von Polyoxyalkylen-Diolen darstellen und beispielsweise erhältlich sind unter dem Handelsnamen Jeffamine® (von Huntsman Chemicals), unter dem Namen Polyetheramin (von BASF) oder unter dem Namen PC Amine® (von Nitroil), wie zum Beispiel Jeffamine® D-230, Jeffamine® D-400, Jeffamine® D-2000, Jeffamine® D-4000, Jeffamine® XTJ-511, Jeffamine® ED-600, Jeffamine® ED-900, Jeffamine® ED-2003, Jeffamine® XTJ-568, Jeffamine® XTJ-569, Jeffamine® XTJ-523, Jeffamine® XTJ-536, Jeffamine® XTJ-542, Jeffamine® XTJ-559; Polyetheramin D 230, Polyetheramin D 400 und Polyetheramin D 2000, PC Amine® DA 250, PC Amine® DA 400, PC Amine® DA 650 und PC Amine® DA 2000;
- Aliphatische Triamine wie 4-Aminomethyl-1,8-octandiamin, 1,3,5-Tris(aminomethyl)-benzol, 1,3,5-Tris-(aminomethyl)-cyclohexan;
- Polyoxyalkylen-Triamine, welche typischerweise Produkte aus der Aminierung von Polyoxyalkylen-Triolen darstellen und beispielsweise erhältlich sind unter dem Handelsnamen Jeffamine® (von Huntsman Chemicals), unter dem Namen Polyetheramin (von BASF) oder unter dem Namen PC Amine® (von Nitroil), wie zum Beispiel Jeffamine® T-403, Jeffamine® T-5000; Polyetheramin T403, Polyetheramin T5000; und PC Amine® TA 403, PC Amine® TA 5000.

Besonders vorteilhaft ist das Polyamin **DA'** ein Diamin, bevorzugt ein asymmetrisches Diamin **DA,** wie es vorgängig beschrieben wurde.

Die überraschende Verminderung des Gehalts an monomeren Diisocyanaten wird vermutlich dadurch erreicht, dass bei dieser Umsetzung mindestens eines Isocyanatgruppen aufweisenden Polyurethanpolymers oder eines oligomeren Polyisocyanates mit mindestens einem Polyaldimin **A'** in Anwesenheit einer unterstöchiometrischen Menge Wasser die hydrolysierenden Aldiminogruppen des Polyaldimins **A'** bevorzugt mit den im Isocyanatgruppen aufweisenden Polyurethanpolymer oder den im oligomeren Polyisocyanat vorhandenen monomeren Diisocyanaten reagiert. Auf diese Weise wird ein grosser Teil der ursprünglich vorhandenen Diisocyanat-Monomere umgesetzt.

### Beispiele

### Beschreibung der Messmethoden

**Infrarotspektren** wurden auf einem FT-IR Gerät 1600 von Perkin-Elmer gemessen (horizontale ATR-Messeinheit mit ZnSe-Kristall). Flüssige Proben wurden unverdünnt als Filme aufgetragen, feste Proben wurden in CH₂Cl₂ gelöst. Die Absorptionsbanden sind in Wellenzahlen (cm⁻¹) angegeben (Messfenster: 4000-650 cm⁻¹).

**¹H-NMR-Spektren** wurden auf einem Spektrometer des Typs Bruker DPX-300 bei 300.13 MHz gemessen; die chemischen Verschiebungen δ sind angegeben in ppm relativ zu Tetramethylsilan (TMS), Kopplungskonstanten J sind angegeben in Hz. Echte und Pseudo-Kopplungsmuster wurden nicht unterschieden.

Die **Viskosität** wurde bei der angegebenen Temperatur auf einem thermostatisierten Kegel-Platten-Viskosimeter Physica UM (Kegeldurchmesser 20 mm, Kegelwinkel 1°, Kegelspitze-Platten-Abstand 0.1 mm, Schergeschwindigkeit 10 bis 1000 s⁻¹) gemessen.

Der **Amingehalt** der hergestellten Dialdimine, das heisst der Gehalt an geschützten Aminogruppen in Form von Aldiminogruppen, wurde titrimetrisch bestimmt (mit 0.1N HCLO₄ in Eisessig, gegen Kristallviolett) und ist stets angegeben in mmol N/g.

Der **Gehalt an monomeren Diisocyanaten** wurde bestimmt mittels HPLC (Detektion über Photodiodenarray; 0.04 M Natriumacetat / Acetonitril als mobile Phasen) und ist angegeben in Gewichts-% bezogen auf die gesamte Zusammensetzung.

Die **Zugfestigkeit** wurde in Anlehnung an DIN 53504 bestimmt, an Hanteln mit einer Dicke von 1 mm und einer Länge von 75 mm (Steglänge 30 mm, Stegbreite 4 mm). Zur Herstellung der Hanteln wurde ein Klebstofffilm von 1 mm Dicke zubereitet (Applikationstemperatur des Klebstoffs 130 °C), aus welchem die Hanteln ausgestanzt und anschliessend während der angegebenen Zeit bei 23 °C und 50% relativer Luftfeuchtigkeit gelagert wurden.

### a) Herstellung von Dialdiminen

### Dialdimin A-1

In einem Rundkolben wurden unter Stickstoffatmosphäre 55.0 g (0.19 mol) destilliertes 2,2-Dimethyl-3-lauroyloxy-propanal vorgelegt. Unter kräftigem Rühren wurden aus einem Eintropftrichter 15.6 g (0.18 mol N) 1-Amino-3-aminomethyl-3,5,5-trimethylcyclohexan (= Isophorondiamin, IPDA; Vestamin® IPD, Degussa; Amingehalt 11.68 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 67.1 g eines klaren, farblosen Öls mit einem Amingehalt von 2.73 mmol N/g und einer Viskosität von 190 mPa·s bei 20 °C.
IR: 2952, 2922, 2852, 2819sh, 1738 (C=O), 1666 (C=N), 1464, 1418, 1394, 1378, 1364, 1350, 1298, 1248, 1236sh, 1158, 1112, 1048, 1020, 1000, 938, 928, 910, 894, 868, 772, 722.
¹H-NMR (CDCl₃, 300 K): δ 7.59 und 7.57 (2×*s*, total 1 H, CH=N ([Isomere]), 7.47 (s, 1 H, CH=N), 4.03 und 4.01 (2xs, 2x2 H, C(CH₃)₂-C*H*₂-O), 3.37 (m, 1 H, N-CH^{Cy}), 3.08 (*dd,* 2 H, *J* ≈ 11.1, N-C*H*₂-C^{Cy}), 2.30 (*t,* 4 H, *J* ≈ 7.5, OC(O)-C*H*₂-CH₂), 1.61 (m, 4 H, OC(O)-CH₂-C*H*₂), 1.60-0.85 (m, 65 H, übrige CH).

### Dialdimin A-2

In einem Rundkolben wurden unter Stickstoffatmosphäre 55.0 g (0.19 mol) destilliertes 2,2-Dimethyl-3-lauroyloxy-propanal vorgelegt. Unter kräftigem Rühren wurden aus einem Eintropftrichter 9.4 g (0.18 mol N) 1,3-Diaminopentan (DAMP; Dytek® EP Diamine, Invista; Amingehalt 19.42 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 60.9 g eines klaren, blassgelben Öls mit einem Amingehalt von 3.01 mmol N/g und einer Viskosität von 50 mPa·s bei 20 °C. IR: 2955sh, 2922, 2868sh, 2852, 1737 (C=O), 1666 (C=N), 1466, 1419, 1394, 1373,1346,1300,1248,1233,1159,1112,1057,1019,1000, 935, 884, 769br, 722.

### Dialdimin A-3

In einem Rundkolben wurden unter Stickstoffatmosphäre 15.0 g (0.175 mol N) 1-Amino-3-aminomethyl-3,5,5-trimethylcyclohexan (= Isophorondiamin, IPDA; Vestamin® IPD, Degussa; Amingehalt 11.68 mmol N/g) vorgelegt. Unter kräftigem Rühren wurden aus einem Eintropftrichter 26.0 g (0.180 mol) destilliertes 3-Acetoxy-2,2-dimethyl-propanal langsam zugegeben, wobei sich die Mischung stark erwärmte. Danach wurden die flüchtigen Bestandteile im Vakuum entfernt (10 mbar, 80 °C). Ausbeute: 37.3 g eines klaren, farblosen Öls mit einem Amingehalt von 4.69 mmol N/g und einer Viskosität von 820 mPa·s bei 20 °C.
IR: 2954, 2931, 2925, 2906, 2869, 2846, 2821, 1740 (C=O), 1666 (C=N), 1470, 1462, 1440sh, 1394, 1374, 1365sh, 1232, 1038, 1008, 986, 971, 940sh, 926, 912, 895, 866, 844, 798.

### b) Herstellung von Polyurethanpolymeren

### Polyurethanpolymer 1

515 g Polyol Dynacoll® 7360 (Degussa; kristallines Polyester-Diol, OH-Zahl 32 mg KOH/g, Säurezahl ca. 2 mg KOH/g) und 84 g 4,4'-Methylendiphenyldiisocyanat (MDI; Desmodur® 44 MC L, Bayer) wurden nach bekanntem Verfahren bei 80 °C zu einem NCO-terminierten Polyurethanpolymeren umgesetzt. Das bei Raumtemperatur feste Reaktionsprodukt hatte einen titrimetrisch bestimmten Gehalt an freien Isocyanatgruppen von 1.95 Gewichts-%.

### Polyurethanpolymer 2

232 g Polyol Dynacoll® 7360 (Degussa; kristallines Polyester-Diol, OH-Zahl 32 mg KOH/g, Säurezahl ca. 2 mg KOH/g), 155 g Polyol Dynacoll® 7110 (Degussa; amorphes Polyester-Diol, OH-Zahl 52 mg KOH/g, Säurezahl ca. 10 mg KOH/g) und 62 g Isophorondiisocyanat (IPDI; Vestanat® IPDI, Degussa) wurden nach bekanntem Verfahren bei 130°C zu einem NCO-terminierten Polyurethanpolymeren umgesetzt. Das bei Raumtemperatur feste Reaktionsprodukt hatte einen titrimetrisch bestimmten Gehalt an freien Isocyanatgruppen von 2.16 Gewichts-%.

### c) Herstellung von Heissschmelzklebstoffen

### Beispiele 1 bis 3 und Vergleichsbeispiel 4

Für jedes Beispiel wurden die jeweiligen Bestandteile gemäss Tabelle 1 auf 100 °C erwärmt und unter Stickstoffatmosphäre in den angegebenen Gewichtsteilen in einen Polypropylenbecher mit Schraubverschluss eingewogen und mittels eines Zentrifugalmischers (SpeedMixer™ DAC 150, FlackTek Inc.; 1 min. bei 3000 U/min) gemischt. Zu der so erhaltenen dünnflüssigen Mischung wurde unmittelbar darauf 0.19 g Wasser, vermischt mit 0.2 g Plurafac® LF 132 (BASF; endverethertes Fettalkoholalkoxylat), gegeben und mittels Zentrifugalmischer eingemischt (1 min. bei 3000 U/min). Die Mischung wurde unmittelbar danach in eine innenlackierte Aluminiumtube abgefüllt und diese luftdicht verschlossen.

**Tabelle 1: Zusammensetzung der Beispiele 1 bis 3 und des Vergleichsbeispiels 4.**

| Beispiel | **1** | **2** | **3** | **4 (Vergleich)** |
|---|---|---|---|---|
| Polyurethanpolymer ***1*** | 50.0 | 50.0 | 50.0 | 50.0 |
| Dialdimin | ***A-1,*** 7.67 | ***A-2,*** 6.93 | ***A-3,*** 4.46 | - |

In den Beispielen 1 bis 3 beträgt das Verhältnis zwischen den Isocyanatgruppen im Polyurethanpolymer ***1*** und den Aldiminogruppen der Dialdimine 1.0/0.9; das Verhältnis zwischen Wasser und den Aldiminogruppen der Dialdimine beträgt 0.5 / 1.0.

Die so hergestellten Heissschmelzklebstoffe der Beispiele 1 bis 3 und des Vergleichsbeispiels 4 waren homogen und dünnflüssig und wurden auf Viskosität, Gehalt an monomerem 4,4'-Methylendiphenyldiisocyanat (4,4'-MDI) und Zugfestigkeit geprüft. Die Ergebnisse sind in der Tabelle 2 dargestellt.

**Tabelle 2: Eigenschaften der Beispiele 1 bis 3 und des Vergleichsbeispiels 4.**

| Beispiel | **1** | **2** | **3** | **4 (Vergleich)** |
|---|---|---|---|---|
| Gehalt an monomerem 4,4'-MDI [Gewichts-%] | 0.23 | 0.19 | 0.33 | 1.57 |
| Viskosität bei 130 °C [Pa·s] | 38 | 130 | 35 | 7.1 |
| Zugfestigkeit | 8.8 | 6.7 | 5.8 | 18.7 |

### Beispiel 5 und Vergleichsbeispiel 6

Für jedes Beispiel wurden die jeweiligen Bestandteile gemäss Tabelle 3 auf 130 °C erwärmt und unter Stickstoffatmosphäre in den angegebenen Gewichtsteilen in einen Polypropylenbecher mit Schraubverschluss eingewogen und mittels eines Zentrifugalmischers (SpeedMixer™ DAC 150, FlackTek Inc.; 1 min. bei 3000 U/min) gemischt. Zu der so erhaltenen dünnflüssigen Mischung wurde unmittelbar darauf 0.21 g Wasser, vermischt mit 0.2 g Plurafac® LF 132 (BASF; endverethertes Fettalkoholalkoxylat), gegeben und mittels Zentrifugalmischer eingemischt (1 min. bei 3000 U/min). Die Mischung wurde unmittelbar danach in eine innenlackierte Aluminiumtube abgefüllt und diese luftdicht verschlossen.

**Tabelle 3: Zusammensetzung des Beispiels 5 und des Vergleichsbeispiels 6. ^{a} Dibutylzinndilaurat.**

| Beispiel | **5** | **6 (Vergleich)** |
|---|---|---|
| Polyurethanpolymer ***2*** | 50.0 | 50.0 |
| Zinnkatalysator^{a} | 0.01 | 0.01 |
| Dialdimin | ***A-1,*** 8.49 | - |

Im Beispiel 5 beträgt das Verhältnis zwischen den Isocyanatgruppen im Polyurethanpolymer ***2*** und den Aldiminogruppen des Dialdimins ***A-1*** 1.0/0.9; das Verhältnis zwischen Wasser und den Aldiminogruppen des Dialdimins ***A-1*** beträgt 0.5 / 1.0.

Die so hergestellten Heissschmelzklebstoffe wurden daraufhin auf Viskosität vor und nach Lagerung, Gehalt an monomerem Isophorondiisocyanat (IPDI; Summe aus *cis-* und trans-Isomeren) und Zugfestigkeit geprüft. Die Ergebnisse sind in der Tabelle 4 dargestellt.

**Tabelle 4: Eigenschaften des Beispiels 5 und des Vergleichsbeispiels 6. ^{a} während 12 Tagen bei 70 °C.**

| Beispiel | **5** | **6 (Vergleich)** |
|---|---|---|
| Gehalt an monomerem IPDI [Gewichts-%] | 0.37 | 1.36 |
| Viskosität bei 130 °C [Pa·s] vor Lagerung | 2.4 | 3.1 |
| Viskosität bei 130 °C [Pa·s] nach Lagerung^{a} | 4.0 | 4.3 |
| Zugfestigkeit | 6.1 | 24.3 |

## Patentansprüche

1. Zusammensetzung, umfassend
a) mindestens eine Isocyanatgruppen und Aldiminogruppen aufweisende Verbindung der Formel (I), und
b) mindestens ein Polyisocyanat **P** 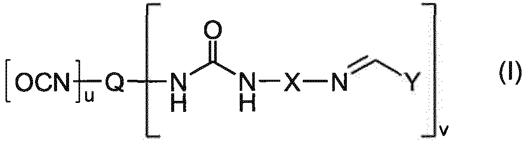 wobei
Q für den Rest eines (u+v) endständige Isocyanatgruppen aufweisenden Polyisocyanats nach Entfernung aller Isocyanatgruppen steht;
u für 1 oder 2 steht;
v für 1 oder 2 steht;
Y für den Rest der Formel (I a) oder (I b) steht, 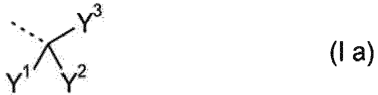 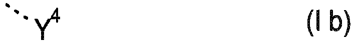 wobei
Y¹ und Y² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht; und
Y⁴ entweder
für eine substituierte oder unsubstituierte Aryl- oder Heteroaryl-Gruppe, welche eine Ringgrösse von 5 bis 8, bevorzugt 6, Atomen aufweist, steht,
oder für 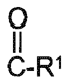 steht, wobei R¹ für ein Wasserstoffatom oder für eine Alkoxygruppe steht,
oder für eine substituierte oder unsubstituierte Alkenyl- oder Arylalkenylgruppe mit mindestens 6 C-Atomen steht;
und
X für den Rest eines Diamins **DA** mit zwei primären Aminogruppen nach der Entfernung dieser zwei Aminogruppen steht,
mit der Massgabe, dass mindestens eine der beiden primären Aminogruppen des Diamins **DA** eine aliphatische Aminogruppe ist und die zwei primären Aminogruppen des Diamins **DA** sich entweder
in der Anzahl der Wasserstoffatome an den in α-Stellung zur jeweiligen Aminogruppe stehenden Kohlenstoffatomen (C_{α}) um mindestens eins
oder
in der Anzahl der Wasserstoffatome an den in β-Stellung zur jeweiligen Aminogruppe stehenden Kohlenstoffatomen (C_{β}) um mindestens zwei
voneinander unterscheiden; **dadurch gekennzeichnet, dass** Wasser ausgeschlossen ist und die Zusammensetzung lagerstabil ist.

2. Zusammensetzung gemäss Anspruch 1, **dadurch gekennzeichnet, dass** die Zusammensetzung eine reaktive Heissschmelzklebstoff-Zusammensetzung darstellt.

3. Zusammensetzung gemäss einem der vorhergehenden Ansprüche , **dadurch gekennzeichnet, dass** das Diamin **DA** ausgewählt ist aus der Gruppe bestehend aus 1,2-Propandiamin, 2-Methyl-1,2-propandiamin, 1,3-Butandiamin, 1,3-Diaminopentan (DAMP), 4-Aminoethylanilin, 4-Aminomethylanilin, 4-[(4-Aminocyclohexyl)methyl]anilin, 2-Aminoethylanilin, 2-Aminomethylanilin, 2-[(4-Aminocyclohexyl)methyl]anilin, 4-[(2-Aminocyclohexyl)methyl]anilin; 2,2,4-Trimethylhexamethylendiamin (TMD), 1,5-Diamino-2-butyl-2-ethyl-pentan, 1-Amino-3-aminomethyl-3,5,5-trimethylcyclohexan (= Isophorondiamin = IPDA) und 1,4-Diamino-2,2,6-trimethylcyclohexan (TMCDA).

4. Zusammensetzung gemäss einem der vorhergehenden Ansprüche, **dadurch gekennzeichnet, dass** Y³ für einen Rest der Formel (II) oder (III), bevorzugt für einen Rest der Formel (III), steht, 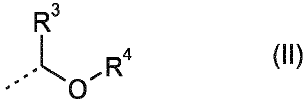 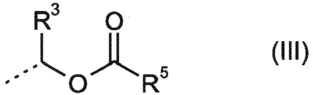
wobei R³ für ein Wasserstoffatom oder für eine Alkyl- oder Arylalkylgruppe, insbesondere mit 1 bis 12 C-Atomen, bevorzugt für ein Wasserstoffatom, steht;
R⁴ für einen Kohlenwasserstoffrest mit 1 bis 30, insbesondere 11 bis 30, C-Atomen, der gegebenenfalls Heteroatome enthält, steht; und
R⁵ entweder
für ein Wasserstoffatom steht,
oder
für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
oder
für einen einfach oder mehrfach ungesättigten, linearen oder verzweigten Kohlenwasserstoffrest mit 5 bis 30 C-Atomen steht,
oder
für einen, gegebenenfalls substituierten, aromatischen oder heteroaromatischen 5- oder 6-gliedrigen Ring steht.

5. Zusammensetzung gemäss einem der vorhergehenden Ansprüche, **dadurch gekennzeichnet, dass** Q für ein (u+v) endständige Isocyanatgruppen aufweisendes Polyurethanpolymer **PUP** nach Entfernung aller Isocyanatgruppen steht, welches insbesondere erhältlich ist aus der Umsetzung von mindestens einem Polyol mit mindestens einem Polyisocyanat, vorzugsweise aus mindestens einem Diol und mindestens einem Diisocyanat.

6. Zusammensetzung gemäss einem der vorhergehenden Ansprüche, **dadurch gekennzeichnet, dass** das Polyisocyanat **P** das gleiche Polyisocyanat ist wie das (u+v) endständige Isocyanatgruppen aufweisende Polyisocyanat, von dem Q im der Verbindung der Formel (I) abgeleitet ist.

7. Zusammensetzung gemäss einem der vorhergehenden Ansprüche, **dadurch gekennzeichnet, dass** der Gehalt der Verbindung der Formel (I) in der Zusammensetzung mindestens 20 Gewichts-%, bezogen auf die Summe der Verbindung der Formel (I) und des Polyisocyanats **P,** beträgt.

8. Verwendung einer Zusammensetzung gemäss einem der Ansprüche 1 bis 7 als Klebstoff, insbesondere als Heissschmelzklebstoff.

9. Verfahren zur Herstellung einer Isocyanatgruppen und Aldiminogruppen aufweisenden Verbindung der Formel (I) wie sie in einem der vorhergehenden Ansprüche beschrieben ist, wobei mindestens ein Dialdimin **A** der Formel (IV a) oder (IV b) mit mindestens einem Polyisocyanat der Formel (V) in Gegenwart einer unterstöchiometrischen Menge Wasser umgesetzt wird, 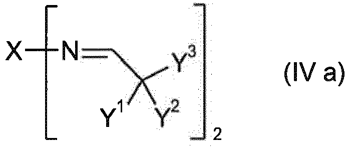 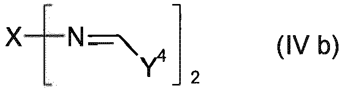 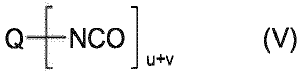 **dadurch gekennzeichnet, dass** das Verhältnis zwischen Wasser und den Aldiminogruppen des Dialdimins **A** höchstens 0.5, insbesondere 0.3 bis 0.5, mol Wasser pro Equivalent Aldiminogruppen beträgt.

10. Verfahren zum Verkleben von einem Substrat **S1** mit einem Substrat **S2,** umfassend die Schritte
i) Applikation einer Zusammensetzung gemäss einem der Ansprüche 1 bis 7 auf ein Substrat **S1;**
ii) Kontaktieren der applizierten Zusammensetzung mit einem Substrat **S2** innerhalb der Offenzeit der Zusammensetzung;
oder
i') Applikation einer Zusammensetzung gemäss einem der Ansprüche 1 bis 7 auf ein Substrat **S1** und auf ein Substrat **S2;**
ii') Kontaktieren der applizierten Zusammensetzung miteinander innerhalb der Offenzeit der Zusammensetzung;
wobei das Substrat **S2** aus dem gleichen oder einem unterschiedlichen Material wie das Substrat **S1** besteht.

11. Verfahren zur Verminderung des Gehalts an monomeren Diisocyanaten in Isocyanatgruppen aufweisenden Polyurethanpolymeren oder in oligomeren Polyisocyanaten, oder in Zusammensetzungen, welche Isocyanatgruppen aufweisende Polyurethanpolymere oder oligomere Polyisocyanate enthalten, in dem diese mit mindestens einem Polyaldimin **A'** der Formel (IV a') oder (IV b') in Gegenwart einer unterstöchiometrischen Menge Wasser, insbesondere weniger als 0.5 mol Wasser pro Equivalent Aldiminogruppen, umgesetzt werden, 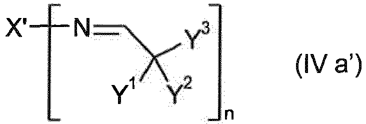 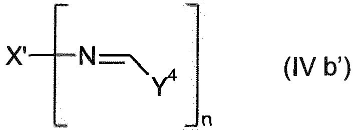 wobei
Y¹ und Y² entweder unabhängig voneinander
jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht; und
Y⁴ entweder
für eine substituierte oder unsubstituierte Aryl- oder Heteroaryl-Gruppe, welche eine Ringgrösse von 5 bis 8, bevorzugt 6, Atomen aufweist, steht,
oder für 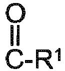 steht, wobei R¹ für ein Wasserstoffatom oder für eine Alkoxygruppe steht,
oder für eine substituierte oder unsubstituierte Alkenyl- oder Arylalkenylgruppe mit mindestens 6 C-Atomen steht;
X' für den Rest eines Polyamins **DA'** mit n primären Aminogruppen nach der Entfernung dieser n Aminogruppen steht und
n für einen Wert von 2 bis 6, insbesondere von 2 oder 3, bevorzugt von 2, steht.

12. Verfahren gemäss Anspruch 11, **dadurch gekennzeichnet, dass** Y³ für einen Rest der Formel (II) oder (III), bevorzugt für den Rest der Formel (III), steht, 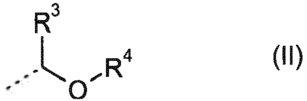 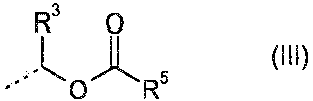
wobei R³ für ein Wasserstoffatom oder für eine Alkyl- oder Arylalkylgruppe, bevorzugt für ein Wasserstoffatom, steht;
R⁴ für einen Kohlenwasserstoffrest mit 1 bis 30, insbesondere 11 bis 30, C-Atomen, der gegebenenfalls Heteroatome enthält, steht; und
R⁵ entweder
für ein Wasserstoffatom steht,
oder
für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
oder
für einen einfach oder mehrfach ungesättigten, linearen oder verzweigten Kohlenwasserstoffrest mit 5 bis 30 C-Atomen steht,
oder
für einen, gegebenenfalls substituierten, aromatischen oder heteroaromatischen 5- oder 6-gliedrigen Ring steht.

13. Verfahren gemäss Anspruch 11 oder 12, **dadurch gekennzeichnet, dass**
das Polyamin **DA'** ein Diamin mit zwei primären Aminogruppen ist und diese zwei Aminogruppen sich
entweder
in der Anzahl der Wasserstoffatome an den in α-Stellung zur jeweiligen Aminogruppe stehenden Kohlenstoffatomen (C_{α}) um mindestens eins
oder
in der Anzahl der Wasserstoffatome an den in β-Stellung zur jeweiligen Aminogruppe stehenden Kohlenstoffatomen (C_{β}) um mindestens zwei
voneinander unterscheiden.

14. Verfahren gemäss Anspruch 15, **dadurch gekennzeichnet, dass** das Polyamin **DA'** ausgewählt ist aus der Gruppe bestehend aus 1,2-Propandiamin, 2-Methyl-1,2-propandiamin, 1,3-Butandiamin, 1,3-Diaminopentan (DAMP), 4-Aminoethylanilin, 4-Aminomethylanilin, 4-[(4-Aminocyclohexyl)methyl]anilin, 2-Aminoethylanilin, 2-Aminomethylanilin, 2-[(4-Aminocyclohexyl)methyl]anilin, 4-[(2-Aminocyclohexyl)methyl]anilin; 2,2,4-Trimethylhexamethylendiamin (TMD), 1,5-Diamino-2-butyl-2-ethyl-pentan, 1-Amino-3-aminomethyl-3,5,5-trimethylcyclohexan (= Isophorondiamin = IPDA) und 1,4-Diamino-2,2,6-trimethylcyclohexan (TMCDA).

## Claims

1. Composition, comprising
a) at least one compound of the formula (I) having isocyanate groups and aldimino groups, and
b) at least one polyisocyanate P 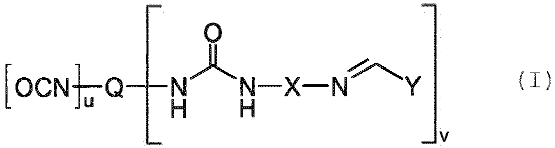 where
Q is the radical of a polyisocyanate having (u+v) terminal isocyanate groups after removal of all isocyanate groups;
u is 1 or 2;
v is 1 or 2;
Y is the radical of the formula (I a) or (I b), 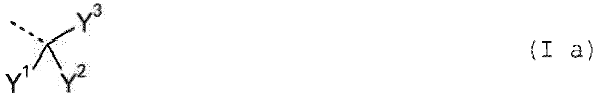 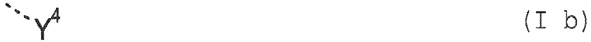 where
Y¹ and Y² are either
each independently a monovalent hydrocarbon radical having 1 to 12 carbon atoms,
or together are a divalent hydrocarbon radical which has 4 to 20 carbon atoms and is part of an optionally substituted carbocyclic ring having 5 to 8, preferably 6, carbon atoms;
Y³ is a monovalent hydrocarbon radical which optionally has at least one heteroatom, especially oxygen in the form of ether, carbonyl or ester groups; and
Y⁴
is either a substituted or unsubstituted aryl or heteroaryl group which has a ring size of 5 to 8, preferably 6, atoms,
or is 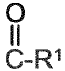 where R¹ is a hydrogen atom or an alkoxy group,
or is a substituted or unsubstituted alkenyl or arylalkenyl group having at least 6 carbon atoms;
and
X is the radical of a diamine **DA** with two primary amino groups after the removal of these two amino groups,
with the proviso that at least one of the two primary amino groups of the diamine **DA** is an aliphatic amino group and the two primary amino groups of the diamine **DA** differ from one another either
in the number of hydrogen atoms on the carbon atoms (C_{α}) in the α position to the particular amino group by at least one
or
in the number of hydrogen atoms on the carbon atoms (C_{β}) in the β position to the particular amino group by at least two;
**characterized in that** water is excluded and the composition is storage-stable.

2. Composition according to Claim 1, **characterized in that** the composition is a reactive hotmelt adhesive composition.

3. Composition according to either of the preceding claims, **characterized in that** the diamine **DA** is selected from the group consisting of 1,2-propanediamine, 2-methyl-1,2-propanediamine, 1,3-butanediamine, 1,3-diaminopentane (DAMP), 4-aminoethylaniline, 4-aminomethylaniline, 4-[(4-aminocyclohexyl)methyl]aniline, 2-aminoethylaniline, 2-aminomethylaniline, 2-[(4-aminocyclohexyl)methyl]aniline, 4-[(2-aminocyclohexyl)methyl]aniline; 2,2,4-trimethylhexamethylenediamine (TMD), 1,5-diamino-2-butyl-2-ethylpentane, 1-amino-3-aminomethyl-3,5,5-trimethylcyclohexane (= isophoronediamine = IPDA) and 1,4-diamino-2,2,6-trimethylcyclohexane (TMCDA).

4. Composition according to any one of the preceding claims, **characterized in that** Y³ is a radical of the formula (II) or (III), preferably a radical of the formula (III), 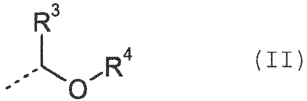 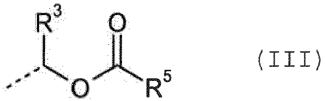
where R³ is a hydrogen atom or an alkyl or arylalkyl group, especially having 1 to 12 carbon atoms, preferably a hydrogen atom;
R⁴ is a hydrocarbon radical which has 1 to 30, especially 11 to 30, carbon atoms and optionally contains heteroatoms; and
R⁵
is either a hydrogen atom,
or
is a linear or branched alkyl radical having 1 to 30, especially 11 to 30, carbon atoms, optionally with cyclic components and optionally with at least one heteroatom,
or
is a mono- or polyunsaturated, linear or branched hydrocarbon radical having 5 to 30 carbon atoms,
or
is an optionally substituted aromatic or heteroaromatic 5- or 6-membered ring.

5. Composition according to any one of the preceding claims, **characterized in that** Q is a polyurethane polymer **PUP** having (u+v) terminal isocyanate groups after removal of all isocyanate groups, which is especially obtainable from the reaction of at least one polyol with at least one polyisocyanate, preferably from at least one diol and at least one diisocyanate.

6. Composition according to any one of the preceding claims, **characterized in that** the polyisocyanate **P** is the same polyisocyanate as the polyisocyanate having (u+v) terminal isocyanate groups, from which Q in the compound of the formula (I) is derived.

7. Composition according to any one of the preceding claims, **characterized in that** the content of the compound of the formula (I) in the composition is at least 20% by weight, based on the sum of the compound of the formula (I) and of the polyisocyanate **P.**

8. Use of a composition according to any one of Claims 1 to 7 as an adhesive, especially as a hotmelt adhesive.

9. Process for preparing a compound of the formula (I) having isocyanate groups and aldimino groups as described in any one of the preceding claims, wherein at least one dialdimine **A** of the formula (IV a) or (IV b) is reacted with at least one polyisocyanate of the formula (V) in the presence of a substoichiometric amount of water, 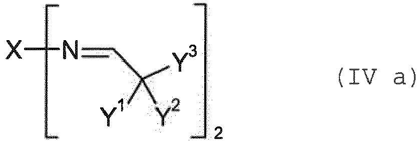 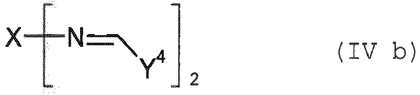 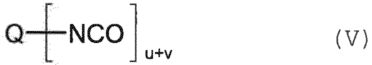 **characterized in that** the ratio between water and the aldimino groups of the dialdimine **A** is at most 0.5, especially 0.3 to 0.5, mol of water per equivalent of aldimino groups.

10. Process for adhesive bonding a substrate **S1** to a substrate **S2,** comprising the steps of
i) applying a composition according to any one of Claims 1 to 7 to a substrate **S1;**
ii) contacting the applied composition with a substrate **S2** within the open time of the composition;
or
i') applying a composition according to any one of Claims 1 to 7 to a substrate **S1** and to a substrate **S2;**
ii') contacting the applied compositions with one another within the open time of the composition;
said substrate **S2** consisting of the same material as or a different material than said substrate **S1.**

11. Process for reducing the content of monomeric diisocyanates in polyurethane polymers having isocyanate groups or in oligomeric polyisocyanates or in compositions which comprise polyurethane polymers having isocyanate groups or oligomeric polyisocyanates, by reacting them with at least one polyaldimine **A'** of the formula (IV a') or (IV b') in the presence of a substoichiometric amount of water, especially less than 0.5 mol of water per equivalent of aldimino groups, 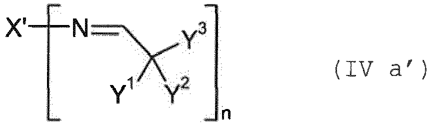 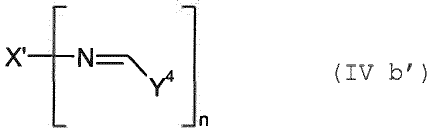 where
Y¹ and Y² are either each independently
a monovalent hydrocarbon radical having 1 to 12 carbon atoms,
or together are a divalent hydrocarbon radical which has 4 to 20 carbon atoms and is part of an optionally substituted carbocyclic ring having 5 to 8, preferably 6, carbon atoms;
Y³ is a monovalent hydrocarbon radical which optionally has at least one heteroatom, especially oxygen in the form of ether, carbonyl or ester groups; and
Y⁴
is either a substituted or unsubstituted aryl or heteroaryl group which has a ring size of 5 to 8, preferably 6, atoms,
or is 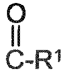 where R¹ is a hydrogen atom or an alkoxy group,
or is a substituted or unsubstituted alkenyl or arylalkenyl group having at least 6 carbon atoms;
X' is the radical of a polyamine **DA'** with n primary amino groups after the removal of these n amino groups and
n is from 2 to 6, especially 2 or 3, preferably 2.

12. Process according to Claim 11, **characterized in that** Y³ is a radical of the formula (II) or (III), preferably the radical of the formula (III), 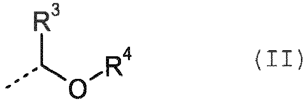 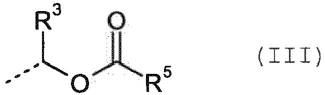
where R³ is a hydrogen atom or an alkyl or arylalkyl group, preferably a hydrogen atom;
R⁴ is a hydrocarbon radical which has 1 to 30, especially 11 to 30, carbon atoms and optionally contains heteroatoms; and
R⁵
is either a hydrogen atom,
or
is a linear or branched alkyl radical having 1 to 30, especially 11 to 30, carbon atoms, optionally with cyclic components and optionally with at least one heteroatom,
or
is a mono- or polyunsaturated, linear or branched hydrocarbon radical having 5 to 30 carbon atoms,
or
is an optionally substituted aromatic or heteroaromatic 5- or 6-membered ring.

13. Process according to Claim 11 or 12, **characterized in that** the polyamine **DA'** is a diamine with two primary amino groups and these two amino groups differ from one another
either
in the number of hydrogen atoms on the carbon atoms (C_{α}) in the α position to the particular amino group by at least one
or
in the number of hydrogen atoms on the carbon atoms (C_{β}) in the β position to the particular amino group by at least two.

14. Process according to Claim 15, **characterized in that** the polyamine **DA'** is selected from the group consisting of 1,2-propanediamine, 2-methyl-1,2-propanediamine, 1,3-butanediamine, 1,3-diaminopentane (DAMP), 4-aminoethylaniline, 4-aminomethylaniline, 4-[(4-aminocyclohexyl)-methyl]aniline, 2-aminoethylaniline, 2-aminomethylaniline, 2-[(4-aminocyclohexyl)methyl]-aniline, 4-[(2-aminocyclohexyl)methyl]aniline; 2,2,4-trimethylhexamethylenediamine (TMD), 1,5-diamino-2-butyl-2-ethylpentane, 1-amino-3-aminomethyl-3,5,5-trimethylcyclohexane (= isophoronediamine = IPDA) and 1,4-diamino-2,2,6-trimethylcyclohexane (TMCDA).

## Revendications

1. Composition, comprenant
a) au moins un composé de formule (I) comportant des groupes isocyanate et des groupes aldimino, et
b) au moins un polyisocyanate **P** 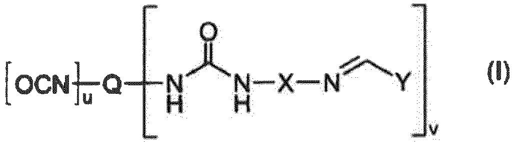 où
Q représente le reste d'un polyisocyanate comportant (u+v) groupes isocyanate en bout de chaîne, après élimination de tous les groupes isocyanate ;
u représente 1 ou 2 ;
v représente 1 ou 2 ;
Y représente le radical de formule (I a) ou (I b), 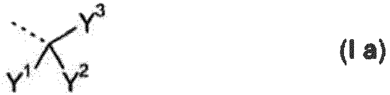 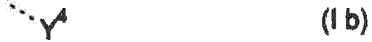 où
Y¹ et Y² soit
indépendamment l'un de l'autre représentent chacun un radical hydrocarboné monovalent ayant de 1 à 12 atomes de carbone,
soit ensemble représentent un radical hydrocarboné divalent ayant de 4 à 20 atomes de carbone, qui fait partie d'un cycle carbocyclique, éventuellement substitué, ayant de 5 à 8, de préférence 6 atomes de carbone ;
Y³ représente un radical hydrocarboné monovalent qui éventuellement comporte au moins un hétéroatome, en particulier un atome d'oxygène sous forme de groupes éther, carbonyle ou ester ; et
Y⁴ soit
représente un groupe aryle ou hétéroaryle substitué ou non substitué qui présente une taille de cycle de 5 à 8, de préférence 6 atomes,
soit représente 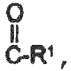 R¹ représentant un atome d'hydrogène ou un groupe alcoxy,
ou représente un groupe alcényle ou arylalcényle substitué ou non substitué ayant au moins 6 atomes de carbone ;
et
X représente le reste d'une diamine **DA** comportant deux groupes amino primaires après élimination de ces deux groupes amino,
étant entendu qu'au moins un des deux groupes amino primaires de la diamine **DA** est un groupe amino aliphatique et les deux groupes amino primaires de la diamine **DA** diffèrent l'un de l'autre soit
d'au moins un quant au nombre des atomes d'hydrogène sur les atomes de carbone (C_{α}) se trouvant en position α par rapport au groupe amino respectif
soit
d'au moins deux quant au nombre des atomes d'hydrogène sur les atomes de carbone (C_{β}) se trouvant en position β par rapport au groupe amino respectif ;
**caractérisée en ce que** l'eau est exclue et la composition est stable au stockage.

2. Composition selon la revendication 1, **caractérisée en ce que** la composition est une composition d'adhésif thermofusible réactif.

3. Composition selon l'une quelconque des revendications précédentes, **caractérisée en ce que** la diamine **DA** est choisie dans le groupe constitué par la 1,2-propanediamine, la 2-méthyl-1,2-propanediamine, la 1,3-butanediamine, le 1,3-diaminopentane (DAMP), la 4-aminoéthylaniline, la 4-aminométhylaniline, le 4-[(4-aminocyclohexyl)méthyl]aniline, la 2-aminoéthylaniline, la 2-aminométhylaniline, la 2-[(4-aminocyclohexyl)-méthyl]aniline, la 4-[(2-aminocyclohexyl)méthyl]-aniline, la 2,2,4-triméthylhexaméthylènediamine (TMD), le 1,5-diamino-2-butyl-2-éthyl-pentane, le 1-amino-3-aminométhyl-3,5,5-triméthylcyclohexane (= isophoronediamine = IPDA) et le 1,4-diamino-2,2,6-triméthyl-cyclohexane (TMCDA).

4. Composition selon l'une quelconque des revendications précédentes, **caractérisée en ce que** Y³ représente un radical de formule (II) ou (III), de préférence un radical de formule (III), 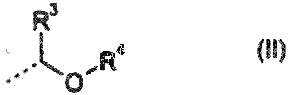 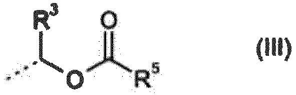
où R³ représente un atome d'hydrogène ou un groupe alkyle ou arylalkyle, en particulier ayant de 1 à 12 atomes de carbone, de préférence un atome d'hydrogène,
R⁴ représente un radical hydrocarboné ayant de 1 à 30, en particulier de 11 à 30, atomes de carbone, qui contient éventuellement des hétéroatomes ; et
R⁵ soit
représente un atome d'hydrogène,
soit
représente un radical alkyle linéaire ou ramifié ayant de 1 à 30, en particulier de 11 à 30, atomes de carbone, comportant éventuellement des fragments cycliques et comportant éventuellement au moins un hétéroatome,
ou
représente un radical hydrocarboné linéaire ou ramifié, une ou plusieurs fois insaturé, ayant de 5 à 30 atomes de carbone,
ou
représente un cycle aromatique ou hétéroaromatique à 5 ou 6 chaînons, éventuellement substitué.

5. Composition selon l'une quelconque des revendications précédentes, **caractérisée en ce que** Q représente un polymère polyuréthane **PUP** comportant (u+v) groupes isocyanate en bout de chaîne, après élimination de tous les groupes isocyanate, qui en particulier peut être obtenu par la mise en réaction d'au moins un polyol avec au moins un polyisocyanate, de préférence à partir d'au moins un diol et d'au moins un diisocyanate.

6. Composition selon l'une quelconque des revendications précédentes, **caractérisée en ce que** le polyisocyanate **P** est le même polyisocyanate que le polyisocyanate comportant (u+v) groupes isocyanate en bout de chaîne, duquel est dérivé Q dans le composé de formule (I).

7. Composition selon l'une quelconque des revendications précédentes, **caractérisée en ce que** la teneur de la composition en le composé de formule (I) est d'au moins 20 % en poids, par rapport à la somme du composé de formule (I) et du polyisocyanate **P.**

8. Utilisation d'une composition selon l'une quelconque des revendications 1 à 7 en tant qu'adhésif, en particulier en tant qu'adhésif thermofusible.

9. Procédé pour la préparation d'un composé de formule (I) comportant des groupes isocyanate et des groupes aldimino, tel qu'il est décrit dans l'une quelconque des revendications précédentes, dans lequel on fait réagir au moins une dialdimine **A** de formule (IVa) ou (IVb) avec au moins un polyisocyanate de formule (V) en présence d'une quantité sous-stoechiométrique d'eau, 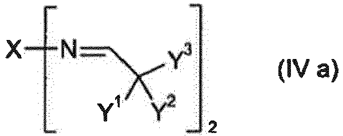 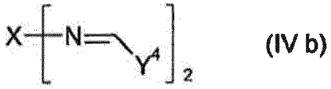 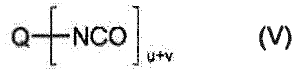 **caractérisé en ce que** le rapport entre l'eau et les groupes aldimino de la dialdimine **A** est au maximum de 0,5, en particulier de 0,3 à 0,5 mole d'eau par équivalent de groupes aldimino.

10. Procédé pour le collage d'un substrat **S1** avec un substrat **S2,** comprenant les étapes
i) application d'une composition selon l'une quelconque des revendications 1 à 7 sur un substrat **S1 ;**
ii) mise en contact de la composition appliquée avec un substrat **S2** dans le délai d'utilisation de la composition ;
ou
i') application d'une composition selon l'une quelconque des revendications 1 à 7 sur un substrat **S1** et sur un substrat **S2 ;**
ii') mise en contact de la composition appliquée sur l'un et l'autre dans le délai d'utilisation de la composition ;
le substrat **S2** consistant en le même matériau que le substrat **S1** ou en un matériau différent de celui-ci.

11. Procédé pour la diminution de la teneur en diisocyanates monomères de polymères polyuréthane comportant des groupes isocyanate ou de polyisocyanates oligomères, ou de compositions qui contiennent des polymères polyuréthane comportant des groupes isocyanate ou des polyisocyanates oligomères, dans lequel on les fait réagir avec au moins une polyaldimine **A'** de formule (IVa') ou (IVb') en présence d'une quantité sous-stoechiométrique d'eau, en particulier de moins de 0,5 mole d'eau par équivalent de groupes aldimino, 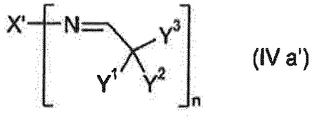 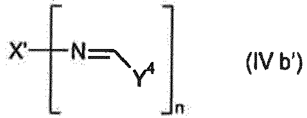
Y¹ et Y² soit indépendamment l'un de l'autre représentant chacun un radical hydrocarboné monovalent ayant de 1 à 12 atomes de carbone,
soit ensemble représentant un radical hydrocarboné divalent ayant de 4 à 20 atomes de carbone, qui fait partie d'un cycle carbocyclique, éventuellement substitué, ayant de 5 à 8, de préférence 6 atomes de carbone ;
Y³ représentant un radical hydrocarboné monovalent qui éventuellement comporte au moins un hétéroatome, en particulier un atome d'oxygène sous forme de groupes éther, carbonyle ou ester ; et
Y⁴ soit
représentant un groupe aryle ou hétéroaryle substitué ou non substitué qui présente une taille de cycle de 5 à 8, de préférence 6 atomes,
soit représentant 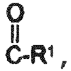 où R¹ représente un atome d'hydrogène ou un groupe alcoxy,
ou représentant un groupe alcényle ou arylalcényle substitué ou non substitué ayant au moins 6 atomes de carbone ;
X' représentant le reste d''une polyamine **DA'** comportant n groupes amino primaires après l'élimination de ces n groupes amino et
n ayant une valeur de 2 à 6, en particulier de 2 ou 3, de préférence de 2.

12. Procédé selon la revendication 11, **caractérisé en ce que** Y³ représente
un radical de formule (II) ou (III), de préférence le radical de formule (III), 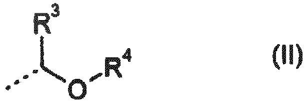 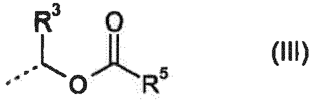
où R³ représente un atome d'hydrogène ou un groupe alkyle ou arylalkyle, de préférence un atome d'hydrogène ;
R⁴ représente un radical hydrocarboné ayant de 1 à 30, en particulier de 11 à 30, atomes de carbone, qui contient éventuellement des hétéroatomes ; et
R⁵ soit
représente un atome d'hydrogène,
soit
représente un radical alkyle linéaire ou ramifié ayant de 1 à 30, en particulier de 11 à 30, atomes de carbone, comportant éventuellement des fragments cycliques et comportant éventuellement au moins un hétéroatome,
ou
représente un radical hydrocarboné linéaire ou ramifié, une ou plusieurs fois insaturé, ayant de 5 à 30 atomes de carbone,
ou
représente un cycle aromatique ou hétéroaromatique à 5 ou 6 chaînons, éventuellement substitué.

13. Procédé selon la revendication 11 ou 12, **caractérisé en ce que**
la polyamine **DA'** est une diamine comportant deux groupes amino primaires et ces deux groupes amino diffèrent l'un de l'autre soit
d'au moins un quant au nombre des atomes d'hydrogène sur les atomes de carbone (C_{α}) se trouvant en position α par rapport au groupe amino respectif
soit
d'au moins deux quant au nombre des atomes d'hydrogène sur les atomes de carbone (C_{β}) se trouvant en position β par rapport au groupe amino respectif.

14. Procédé selon la revendication 15, **caractérisé en ce que** la polyamine **DA'** est choisie dans le groupe constitué par la 1,2-propanediamine, la 2-méthyl-1,2-propanediamine, la 1,3-butanediamine, le 1,3-diaminopentane (DAMP), la 4-aminoéthylaniline, la 4-aminométhylaniline, le 4-[(4-aminocyclohexyl)méthyl]aniline, la 2-aminoéthylaniline, la 2-aminométhylaniline, la 2-[(4-aminocyclohexyl)méthyl]aniline, la 4-[(2-amino-cyclohexyl)méthyl]aniline, la 2,2,4-triméthylhexaméthylènediamine (TMD), le 1,5-diamino-2-butyl-2-éthyl-pentane, le 1-amino-3-aminométhyl-3,5,5-triméthylcyclohexane (= isophoronediamine = IPDA) et le 1,4-diamino-2,2,6-triméthylcyclohexane (TMCDA).
